# EUROPÄISCHE PATENTSCHRIFT

(11) **EP 3 491 282 B1**
(45) Veröffentlichungstag und Bekanntmachung des Hinweises auf die Patenterteilung: **28.10.2026**
(21) Anmeldenummer: 17754069.7
(22) Anmeldetag: 27.07.2017
(51) Int. Cl.: F16L 37/098

(54) **ANORDNUNG EINES HALTEELEMENTS UND EINES STECKERTEILS SOWIE ANSCHLUSSVERBINDER MIT EINER SOLCHEN**
ARRANGEMENT OF A HOLDING ELEMENT AND A PLUG PART AND TERMINAL CONNECTOR HAVING SUCH AN ARRANGEMENT
AGENCEMENT D'UN ÉLÉMENT DE RETENUE ET D'UNE PARTIE DE CONNECTEUR AINSI QU'UN CONNECTEUR DE RACCORDEMENT DOTÉ D'UN TEL AGENCEMENT

(30) Priorität: 29.07.2016 DE 102016015682; 29.07.2016 DE 102016009168
(43) Veröffentlichungstag der Anmeldung: 05.06.2019
(73) Patentinhaber: Voss Automotive GmbH, 51688 Wipperfürth (DE)
(72) Erfinder: KLEIN, Roland, 51688 Wipperfürth (DE); HEINRICHS, Eugen, 51702 Bergneustadt (DE)
(74) Vertreter: Rebbereh, Cornelia
(86) Internationale Anmeldenummer: PCT/EP2017/000908
(87) Internationale Veröffentlichungsnummer: WO 2018/019422

(56) Entgegenhaltungen:
- EP-A1- 0 946 841
- WO-A1-2015/180875
- DE-A1- 102004 053 538
- DE-A1- 102009 019 395
- DE-A1- 102013 017 442
- US-A- 5 924 746

## Beschreibung

Die Erfindung betrifft eine Anordnung eines Halteelements und eines Steckerteils für einen Anschlussverbinder, der zumindest einen Muffenteil und zumindest den Steckerteil umfasst, wobei der Steckerteil in einen Muffenabschnitt des Muffenteils einsteckbar oder eingesteckt ist, wobei das Halteelement auf den Steckerteil montiert ist zum lösbaren Halten des Steckerteils in dem Muffenteil, wobei das Halteelement einen Halteelementkörper, erste Haltearme mit nach innen bezüglich des Halteelements gerichteten Rastnasen, zweite Haltearme mit nach außen bezüglich des Halteelements gerichteten Rastnasen und axial beidseitig endseitig einen unterbrechungsfreien, durchgehenden Rand aufweist, sowie einen Anschlussverbinder, insbesondere für Schlauch- und/oder Rohrleitungen, umfassend zumindest einen Muffenteil und zumindest einen Steckerteil, wobei der Steckerteil in einen Muffenabschnitt des Muffenteils einsteckbar oder eingesteckt ist und wobei zumindest ein solches Halteelement zum lösbaren Halten des Steckerteils in dem Muffenteil vorgesehen ist.

Anschlussverbinder mit Steckerteil und Muffenteil sind in den unterschiedlichsten Ausführungsvarianten im Stand der Technik bekannt. Um den Steckerteil im Muffenteil zu sichern, ist es bekannt, Halteelemente zu diesem Zweck vorzusehen. Diese sind in unterschiedlichsten Ausgestaltungen bekannt. Beispielsweise besteht nach der EP 0 999 398 B1 ein Steckverbinder für Schlauch- und/oder Rohrleitungen aus einem Muffenteil und einem Steckerteil, wobei der Steckerteil mit einem Steckerschafft in eine Aufnahmeöffnung des Muffenteils eingesteckt wird. Der gesteckte Steckerteil wird gegen das Muffenteil über eine Umfangsdichtung abgedichtet sowie über eine Verriegelungseinrichtung gegen Herausziehen arretiert. Innerhalb des Muffenteils ist ein hohlzylindrischer, axial in den eingesteckten Steckerschaft eingreifender Steckzapfen angeordnet. Die Verriegelungseinrichtung besteht aus zumindest zwei diametral gegenüber liegenden, sich axial in Löserichtung etwa parallel zur Steckachse erstreckenden, in axialer Richtung federelastischen Rastarmen des Steckerteils, wobei die Rastarme im eingestecktem Zustand jeweils eine in der Aufnahmeöffnung des Muffenteils gebildete Hinterschneidungsfläche formschlüssig hintergreifen. Die Verriegelungseinrichtung ist einteilig mit dem Steckerteil ausgebildet.

Aus der DE 86 04 217 U1 ist eine weitere Steckverbindung für Druckmittelleitungen, insbesondere zum Anschluss von Bremsleitungen an einen Bremsventilkörper, bekannt, die aus einem Gehäuse und einem in eine Anschlussbohrung des Gehäuses mit seinem Steckerschaft einsteckbaren Stecker mit Durchgangsöffnung besteht. Der Stecker ist mittels eines Halteelements in axialer Richtung gegen Verschieben gehalten und mittels einer zwischen Steckerschaft und Gehäuse angeordneten Umfangsdichtung abgedichtet. Gegenüber dem Gehäuse ist der Stecker durch eine formschlüssige Verbindung gegen Verdrehen fixiert. Die formschlüssige Verbindung besteht aus zwei am Umfang des Steckerschafts angeordneten, mit diesem verdrehfest verbundenen Rastelementen, die in Durchbrüchen des Gehäuses im eingesteckten Zustand des Steckers einrasten, die Rastelemente bestehen aus Rastzungen. Das Halteelement besteht aus einem Bajonettverschluss, der von einer auf dem Steckerschaft angeordneten Arretierungshülse und dem Gehäuse gebildet wird.

Die EP 2 224 156 A2 offenbart einen Steckverbinder für Medienleitungen, der einen Steckerteil umfasst, der mit einem Steckerschaft dichtend in eine Aufnahmeöffnung eines Verbindergegenstücks eingesteckt und diesem gegenüber rastend lösbar gegen Herausziehen arretiert werden kann. Die Rastmittel bestehen aus zumindest zwei Rastarmen des Steckerteils, die sich zur Steckachse etwa parallel in Löserichtung erstrecken und in radialer Richtung federelastisch ausgebildet sind. Die Rastarme hintergreifen im eingesteckten Zustand jeweils eine innerhalb der Aufnahmeöffnung des Verbindergegenstücks vorhandene Raststufe form- oder kraftschlüssig. Der Steckerteil ist mit den Rastarmen als einstückiges, monolithisches Formteil ausgebildet. Die Rastmittel sind ferner derart ausgebildet, dass in Einsteck- und Löserichtung unterschiedliche Kräfte zu überwinden sind. Ein Demontieren erfolgt durch Angreifen an Endabschnitten der Rastarme, die aus dem Verbindergegenstück herausragen und benachbart zu dem Steckerteil angeordnet sind.

Die EP 1 106 896 B1 offenbart eine weitere Steckverbindung für Druckmittelleitungen, die aus einem Gehäuseteil und einem Steckerteil besteht.

Der Steckerteil ist mit seinem Steckerschaft dichtend in eine Aufnahmeöffnung des Gehäuseteils eingesteckt und mittels eines separaten Halteelements mit in radialer Richtung elastisch beweglichen Haltemitteln lösbar arretiert. Dies geschieht dadurch, dass das Halteelement in einer Arretierstellung mit den Haltemitteln zwischen einer inneren Ringstufe in der Aufnahmeöffnung und einer äußeren Ringstufe des Steckerschafts sitzt, wobei das Halteelement derart in axialer Richtung zwischen einer Sicherungsstellung und einer Freigabestellung verschiebbar auf dem Steckerschaft sitzt, dass die Haltemittel in der Sicherungsstellung gegen eine radiale Lösebewegung blockiert und in der Freigabestellung für eine radiale Lösebewegung freigegeben werden. Es erfolgt eine axiale Montage und eine Demontage durch eine axiale Hebebewegung durch Angreifen an dem Halteelement mittels eines Löse- bzw. Hebewerkzeugs. Außer dem Haltelement ist das Vorsehen des Federelementes erforderlich, um das gewünschte Arretieren zu ermöglichen.

Aus der WO 2015/058857 A2 ist ferner ein Anschlussverbinder, umfassend einen Muffenteil und einen Steckerteil, bekannt, wobei der Steckerteil in eine Aufnahmeöffnung des Muffenteils eingesteckt ist und wobei ein Haltelement zum lösbaren Verrasten des Steckerteils in dem Muffenteil vorgesehen ist. Haltelement und Steckerteil sind zweiteilig ausgebildet und das Halteelement radial aufweitbar und auf dem Aufnahmeabschnitt des Steckerteils verliersicher und verdrehsicher montiert. Das Halteelement weist zumindest einen Haltearm mit außenseitig auskragender Haltenase auf, wobei sich der Haltearm etwa parallel zur Steckachse des Steckerteils erstreckt und in radialer Richtung bezüglich des Steckerteils federelastisch bewegt werden kann, um die Haltenase mit einer Verrastungsfläche des Muffenteils in Verrastung zu bringen bzw. zu entriegeln. Zum geführten Angreifen eines Lösewerkzeugs an dem Halteelement zum Lösen der Verbindung von Steckerteil mit Halteelement und Muffenteil sind Führungsflächen bzw. Führungsabschnitte an dem Halteelementkörper benachbart zu dem freien Ende des zumindest einen Haltearms vorgesehen.

Die WO 2015/180875 A1 offenbart einen Steckverbinder zum Verbinden einer Fluidleitung mit einer anderen Fluidleitung oder einem Aggregatanschluss, umfassend ein Gehäuse mit einem Durchgangskanal, wobei ein Ende des Gehäuses als Muffenabschnitt zum Einstecken eines Gegensteckverbinders ausgebildet ist und Rastmittel zum lösbaren Fixieren des Gegensteckverbinders aufweist. Die Rastmittel sind Bestandteil einer in den Muffenabschnitt steckbaren Adapterhülse, die im Muffenabschnitt mittels radial elastischer Formschlusselemente gehalten ist, und eine Durchgangsöffnung für einen Steckerschaft des Gegensteckverbinders aufweist. Sie sind ferner aus zwei in Bezug auf eine Längsmittelachse des Steckverbinders radial elastischen Rastarmen gebildet und am Umfang der Adapterhülse durch schlitzförmige Freischnitte in deren Hülsenwandung ausgebildet. Die Rastarme weisen an ihrem freien Ende radial in Richtung auf die Längsmittelachse verlaufende Rastnocken auf, wobei die Formschlusselemente aus am äußeren Umfang der Adapterhülse zwischen den Rastarmen ausgebildeten, radial elastischen Rastfortsätzen bestehen, die im eingesteckten Zustand in Ausnehmungen in der Umfangswand des Muffenabschnitts formschlüssig rastend eingreifen. Die Rastnocken weisen einen radialen Abstand zur Längsmittelachse auf, der kleiner ist als ein Innenradius der Durchgangsöffnung. Ein radialer Abstand der Rastarme in Bezug auf die Längsmittelachse ist in einem an die Rastnocken angrenzenden Bereich gleich dem Innendurchmesser der Durchgangsöffnung oder kleiner als der Innendurchmesser der Durchgangsöffnung.

Der vorliegenden Erfindung liegt nun die Aufgabe zugrunde, eine Anordnung nach dem Oberbegriff des Anspruchs 1 und einen Anschlussverbinder mit einer solchen dahingehend fortzubilden, dass der Verrastungszustand von Muffenteil und Steckerteil des Anschlussverbinders noch besser gesichert werden kann, um einen solchen Anschlussverbinder insbesondere bei Durchleiten von unter Druck stehendem Medium durch diesen sehr sicher zu gestalten.

Die Aufgabe wird durch eine Anordnung nach dem Oberbegriff des Anspruchs 1 dadurch gelöst, dass die ersten und zweiten Haltearme jeweils ein freies und in radialer Richtung federelastisch bewegbares Ende und ein diesem gegenüberliegendes, an dem Halteelementkörper festliegendes Ende aufweisen, um die Rastnasen der zweiten Haltearme an einer Verrastungsfläche oder Verrastungsöffnung des Muffenteils zu verrasten und aus der Verrastungsposition wieder lösen zu können, wobei an endseitig freien Enden der zweiten mit nach außen bezüglich des Halteelements gerichteten Rastnasen versehenen Haltearme ein Betätigungselement radial nach außen ragt zum Lösen aus der Verrastungsposition. Die Aufgabe wird ferner für einen Anschlussverbinder mit den Merkmalen des Anspruchs 8 gelöst. Weiterbildungen der Erfindung sind in den abhängigen Ansprüchen definiert.

Dadurch werden eine Anordnung eines Halteelements und eines Steckerteils für einen Anschlussverbinder und ein Anschlussverbinder geschaffen, wobei der Anschlussverbinder zumindest einen Muffenteil und zumindest einen Steckerteil umfasst, die ineinander steckbar sind, wobei der Steckerteil in einen Muffenabschnitt mit Aufnahmeöffnung des Muffenteils eingesteckt wird. Das zumindest eine Halteelement ist mit dem Steckerteil entweder einteilig oder verbunden, insbesondere durch Aufstecken. Es ist verliersicher auf einem Aufnahmeabschnitt des Steckerteils montiert. Das Halteelement kann in zumindest einem Abschnitt radial aufgeweitet werden und weist zumindest einen zweiten Haltearm mit zumindest einer außenseitig auskragenden Rastnase auf, wobei der zumindest eine zweite Haltearm ein freies Ende und ein am Halteelementkörper, also dem Körper des Halteelements, festes Ende aufweist und in radialer Richtung bezüglich des Steckerteils federelastisch bewegt werden kann. Hierdurch ist es möglich, die zumindest eine Rastnase, die an dem zweiten Haltearm angeordnet ist, an einer Verrastungsfläche oder Verrastungsöffnung des Muffenteils zu verrasten bzw. aus der Verrastungsposition dort wieder zu lösen. Zum Lösen ist kein weiteres Werkzeug erforderlich, vielmehr kann dieses durch Betätigen eines Betätigungselements an dem Haltearm erfolgen.

Der Steckerteil kann einerseits als monolitischer Steckerteil ausgebildet sein, wobei die Haltearme direkt am Körper des Steckerteils angeordnet, insbesondere mit diesem einstückig ausgebildet sind. Ferner ist es möglich, ein separates Halteelement auszubilden und auf einen Aufnahmeabschnitt des Steckerteils axial aufzufügen bzw. aufzuschieben. Steckerteil und Halteelement sind dann mehrteilig.

Das Halteelement weist erste Haltearme mit nach innen und solche mit nach außen bezüglich des Halteelements gerichteten Rastnasen auf. Eine Kombination von nach außen und nach innen gerichteten und damit wirkenden Rastnasen an dem Halteelement dient nicht nur als Verliersicherung, sondern vor allem dem Verrasten des Haltelements auf dem Steckerteil einerseits und an dem Muffenteil andererseits. Hierbei nehmen die nach innen gerichteten Rastnasen die gleichen Kräfte auf wie die nach außen gerichteten Rastnasen.

Ferner erweist es sich als vorteilhaft, bei zweiteiligem Ausbilden von Steckerteil und Halteelement zumindest eines von beiden mit einer Verdrehsicherung zu versehen, um bei der Montage und im Betrieb ein ungewolltes Verdrehen von Steckerteil und Halteelement gegeneinander zu verhindern. Insbesondere kann der Steckerteil außenseitig in zumindest einem Abschnitt mehrkantig ausgebildet sein, um eine solche Verdrehsicherung vorzusehen. Ferner ist es möglich, dass nur oder auch der Muffenteil zumindest eine Verdrehsicherung aufweist, um den Muffenteil in der gewünschten Ausrichtung und Positionierung zu dem Steckerteil auf diesen aufstecken zu können. Insbesondere kann der Muffenteil zumindest ein vorkragendes Element und/oder zumindest eine gegen Verdrehen sichernde Fläche und/oder Formgebung aufweisen. Besonders vorteilhaft weist der Steckerteil und/oder das Halteelement, das auf diesen aufgefügt wird oder einstückig mit diesem ausgebildet ist, eine entsprechende Gegenfläche auf, so dass die sich berührenden Flächen von Muffenteil und Steckerteil bzw. Halteelement auf diesem das Verdrehen von Steckerteil und Muffenteil verhindern. Dies kann auch durch ein gegengleich ausgebildetes Element bzw. eine Nut, Aussparung oder Ausnehmung am Steckerteil bzw. am Halteelement, auf dem Steckerteil oder an dem Steckerteil vorgesehen werden, das/die mit dem zumindest einen vorkragenden Element am Muffenteil ineinandergreift und dementsprechend eine Verdrehsicherung und/oder Positionierhilfe für den Muffenteil gegenüber dem Steckerteil ausbildet. Ferner kann auch der Muffenteil eine Nut, Ausnehmung oder Aussparung oder eine entsprechende Hinterschnittfläche aufweisen, in die ein entsprechend vorkragendes Element am Steckerteil bzw. Halteelement auf diesem eingreift, um hierüber eine Verdrehsicherung und/oder Positionierhilfe zu bilden.

Als weiter vorteilhaft erweist es sich, wenn der Steckerteil, insbesondere der Aufnahmeteil an dem Steckerteil zum Aufnehmen des Halteelements, mit zumindest einer mit dem Halteelement zusammenwirkenden Einrichtung zur Druckverriegelung versehen ist, die ein Entriegeln des Halteelements bei im Innern des Anschlussverbinders anliegendem Druck verhindert. Bei Vorsehen einer Druckverriegelung ist das Vorsehen des Anschlussverbinders mit dem zumindest einen Steckerteil und dem zumindest einen Muffenteil ausreichend, wobei der Steckerteil in den Muffenabschnitt des Muffenteils eingesteckt werden kann, wobei das zumindest eine Halteelement zum lösbaren Halten des Steckerteils in dem Muffenteil vorgesehen ist und wobei der Steckerteil mit dem Halteelement versehbar oder versehen ist. Besonders bevorzugt umfasst die Druckverriegelungseinrichtung zumindest ein von der Außenseite des Aufnahmeabschnitts des Steckerteils vorkragendes Element, insbesondere zumindest einen vorkragenden Stift oder zumindest eine vorkragende Erhebung. Das Halteelement umfasst vorteilhaft zumindest eine Öffnung. Diese zumindest eine Öffnung ist vorteilhaft in (zumindest) einem der Haltearme des Halteelements angeordnet. Gerade bei im Innern des Anschlussverbinders anliegendem Druck, beispielsweise durch dort hindurchströmendes und unter.Druck stehendes Medium, ist es wichtig, dass Steckerteil und Muffenteil sicher aneinander festgehalten werden. Bei Ausbilden von Steckerteil und Halteelement als zwei Teile, die aufeinander gesteckt werden, erweist es sich dementsprechend als vorteilhaft, das Halteelement bei im Innern des Anschlussverbinders anliegendem Mediendruck über die Druckverriegelungseinrichtung, insbesondere ein oder mehrere am Aufnahmeabschnitt des Steckerteils vorstehende Elemente, zu verriegeln und festzuhalten. Eine relative Axialbewegung zwischen Halteelement und Steckerteil wird durch Druckbeaufschlagung des Steckerteils hervorgerufen. Letzterer bewegt sich dabei axial in Gegensteckrichtung, also entgegen der Steckrichtung, während das Halteelement axial unverschieblich im Muffenteil fixiert ist. Zur Druckverriegelung liegt das vorkragende Element durch Verschiebung des Halteelements gegenüber dem Steckerteil in Axialrichtung des Halteelements vorteilhaft außerhalb einer Öffnung in dem Halteelement.

Hierdurch wird ein radiales Bewegen des Haltearms oder der Haltearme blockiert. Es wird somit vorteilhaft ein solches axiales Spiel des Halteelements auf dem Aufnahmeabschnitt des Steckerteils vorgesehen, dass dieses mindestens ausreichend weit von der Öffnung zum Eintauchen des zumindest einen vorkragenden Elements entfernt ist, so dass sich die Haltearme dann nicht in einer Löseposition befinden, wenn das zumindest eine vorkragende Element sich außerhalb der Öffnung befindet. Durch die Axialverschiebung zwischen dem Steckerteil und dem Halteelement werden die vorkragenden Elemente aus dem Bereich der Öffnung(en) verschoben und sperren somit die Haltearme radial. Ferner kann der Aufnahmeabschnitt des Steckerteils Kanten aufweisen und/oder mehreckig bzw. mehrkantig ausgebildet werden und/oder sich in Längsrichtung des Steckerteils erstreckende vorstehende Elemente, wie Streben, aufweisen, die einerseits mit entsprechend gegengleich ausgebildeten Flächen oder Abschnitten des Halteelements ineinandergreifen, andererseits eine Verdrehsicherung zum Verhindern eines Verdrehens des Halteelementes auf dem Aufnahmeabschnitt des Steckerteils bewirken.

Als weiter vorteilhaft erweist es sich, wenn der Muffenteil aus zumindest einem Kunststoffmaterial besteht und mit der zumindest einen mantelseitigen Verrastungsöffnung versehen, ist. Alternativ kann der Muffenteil als Zerspanungsteil ausgebildet sein, insbesondere aus zumindest einem Metall bestehen, und mit zumindest einer Hinterschnittfläche als Verrastungsfläche zum Verrasten der zumindest einen Rastnase des zumindest einen Haltearms des Halteelements versehen sein. Vorteilhaft weist somit der Muffenteil bei Ausbilden desselben aus zumindest einem Kunststoffmaterial eine mantelseitige Verrastungsöffnung auf, damit dort die zumindest eine Rastnase des zumindest einen Haltearms des Halteelements, das auf dem Steckerteil angeordnet ist oder wird, eingreifen kann. Alternativ kann der Muffenteil als Zerspanungsteil aus zumindest einem Metall ausgebildet sein. In diesem Falle weist er vorteilhaft eine Verrastungsfläche, die insbesondere eine Hinterschnittfläche ist, auf, damit dort die zumindest eine Rastnase des zumindest einen Haltearms des Halteelements, das auf dem Steckerteil angeordnet wird, eingreifen kann. Der Steckerteil kann somit sowohl mit einem Muffenteil aus einem Kunststoffmaterial als auch mit einem Muffenteil aus zumindest einem Metall kombiniert werden. Auch der Steckerteil kann aus zumindest einem Kunststoffmaterial oder zumindest einem Metall bestehen. Insbesondere kann der Steckerteil ferner als gerader Steckerteil oder Winkelsteckerteil oder in beliebiger, auch gekrümmter Formgebung ausgebildet werden. Das Halteelement kann insbesondere aus zumindest einem Kunststoffmaterial, jedoch ebenfalls aus zumindest einen Metall oder einer Kombination aus Kunststoff und Metall bestehen.

Bei Vorsehen beispielsweise einer Mehrkantform, insbesondere Vierkantform, des Aufnahmeabschnitts des Steckerteils, auf dem das Halteelement aufgenommen ist bzw. sitzt, kann die Position von Halteelement, in 90°-Schritten auf dem Steckerteil bzw. um dessen Umfang herum variiert werden. Dies erweist sich besonders dann als vorteilhaft, wenn der Anschlussverbinder schlecht zugänglich, beispielsweise in einem Fahrzeug, angeordnet ist oder wird, insbesondere in einem sehr beengten Raum.

Zur näheren Erläuterung der Erfindung werden im Folgenden Ausführungsbeispiele von dieser näher anhand der Zeichnungen beschrieben. Diese zeigen in:
- Figur 1: eine perspektivische Ansicht eines erfindungsgemäßen Anschlussverbinders mit Steckerteil mit Halteelement und mit Muffenteil im Anlieferungszustand mit noch nicht gestecktem Steckerteil und Muffenteil,
- Figur 2: eine Längsschnittansicht durch den Anschlussverbinder gemäß Figur 1 in einer unvollständigen Vormontage- oder Vor-Steckposition von Steckerteil und Muffenteil mit blockierten Haltearmen des Halteelements auf dem Steckerteil,
- Figur 3: eine Längsschnittansicht des Anschlussverbinders gemäß Figur 1 in einer vollständig gesteckten Position von Steckerteil und Muffenteil mit freien Haltearmen des Halteelements auf dem Steckerteil,
- Figur 3a: eine weitere Längsschnittansicht des Anschlussverbinders gemäß Figur 1 in einer vollständig gesteckten Position von Steckerteil und Muffenteil mit freien Haltearmen des Halteelements auf dem Steckerteil,
- Figur 4: eine Längsschnittansicht einer zweiten Ausführungsform eines erfindungsgemäßen Anschlussverbinders mit Steckerteil und Muffenteil, wobei der Muffenteil als Zerspanungsteil ausgebildet ist, in einer vollständig gesteckten Position von Steckerteil und Muffenteil,
- Figur 5: eine perspektivische Ansicht eines Winkelsteckerteils, der in seinem Aufnahmeabschnitt zum Aufnehmen eines Halteelementes außenseitig mit vorkragenden Elementen zum Ausbilden einer Druckverriegelungseinrichtung in Kombination mit einem dort aufgefügten Halteelement versehen ist,
- Figur 5a: eine Längsschnittansicht des Winkelsteckerteils gemäß Figur 5,
- Figur 6: eine perspektivische Ansicht einer weiteren Ausführungsform eines Winkelsteckerteils, bei dem der Aufnahmeabschnitt zum Aufnehmen eines Halteelementes mehrkantig ausgebildet ist zum Vorsehen einer Verdrehsicherung für das dort aufgefügte Halteelement,
- Figur 6a: eine Längsschnittansicht des Winkelsteckerteils gemäß Figur 6,
- Figur 7: eine perspektivische Ansicht eines als gerader Steckerteil ausgebildeten Steckerteils mit einem mit vorkragenden Elementen zum Ausbilden einer Druckverriegelungseinrichtung in Zusammenwirken mit einem auf dem Aufnahmeabschnitt des Steckerteils aufgefügten Halteelement versehenen vorkragenden Elementen,
- Figur 7a: eine Längsschnittansicht durch den Steckerteil gemäß Figur 7,
- Figur 8: eine perspektivische Ansicht eines geraden Steckerteils mit mehrkantigem Aufnahmeabschnitt zum Ausbilden einer Verdrehsicherung für ein dort aufgefügtes Halteelement,
- Figur 8a: eine Längsschnittansicht durch den Steckerteil gemäß Figur 8,
- Figur 9: eine perspektivische Ansicht des Muffenteils des Anschlussverbinders gemäß Figur 1,
- Figur 9a: eine Längsschnittansicht durch den Muffenteil gemäß Figur 9,
- Figur 10: eine perspektivische Ansicht des Muffenteils des Anschlussverbinders gemäß Figur 4,
- Figur 10a: eine Längsschnittansicht durch den Muffenteil gemäß Figur 10,
- Figur 11a: bis
- Figur 11e: verschiedene perspektivische Ansichten eines Halteelementes einer erfindungsgemäßen Anordnung zum Auffügen auf einem Aufnahmeabschnitt eines Steckerteils eines Anschlussverbinders,
- Figur 11f: eine Draufsicht auf das Halteelement gemäß Figur 11a bis 11e,
- Figur 11g: eine erste Seitenansicht des Halteelementes gemäß Figur 11a bis 11e,
- Figur 11h: eine gegenüber der Ansicht in Figur 11g um 90° gedrehte Seitenansicht des Halteelementes gemäß Figur 11a bis 11e,
- Figur 11i: eine gegenüber der Ansicht in Figur 11h um 180° gedrehte Seitenansicht des Halteelementes gemäß Figur 11a bis 11e,
- Figur 11j: eine Unteransicht des Halteelementes gemäß Figur 11a bis 11e,
- Figur 11k: eine Längsschnittansicht des Halteelementes gemäß Figur 11a bis 11e, geschnitten entlang der Linie D-D aus Figur 11j,
- Figur 11l: eine weitere Längsschnittansicht des Halteelementes gemäß Figur 11a bis 11e, geschnitten entlang der Linie E-E aus Figur 11j,
- Figur 12a: eine baukastenartige Anordnung eines geraden Steckerteils und eines Winkelsteckerteil mit O-Ring als Dichtring, eines Halteelementes zum Auffügen auf den jeweiligen Aufnahmeabschnitt des jeweiligen Steckerteils, sowie dreier verschiedener Muffenteile zum Kombinieren mit den Steckerteilen,
- Figur 12b: eine perspektivische Ansicht der baukastenartigen Anordnung der beiden Steckerteile und drei Muffenteile sowie des Halteelementes gemäß Figur 12a,
- Figur 12c: eine weitere perspektivische Ansicht der baukastenartigen Anordnung der beiden Steckerteile, drei Muffenteile und des Halteelementes gemäß Figur 12a,
- Figur 12d: eine weitere perspektivische Ansicht der baukastenartigen Anordnung nach Figur 12a, umfassend die beiden Steckerteile und drei Muffenteile sowie das Halteelement,
- Figur 13a: eine Längsschnittansicht eines erfindungsgemäßen Anschlussverbinders gemäß Figur 1, wobei dieser sich in einer freigegebenen Druckverriegelungsposition befindet und wobei zum Verdeutlichen der freien Position der Druckverriegelung ein Detail im Bereich der Haltearme des Halteelementes vergrößert gezeigt ist,
- Figur 13b: eine Seitenansicht des Anschlussverbinders gemäß Figur 13a, wobei zum Verdeutlichen der freien Position der Druckverriegelung ein Detail im Bereich eines Haltearmes des Halteelements vergrößert gezeigt ist,
- Figur 14a: eine Längsschnittansicht eines erfindungsgemäßen Anschlussverbinders in der Ausgestaltung nach Figur 1, wobei zusätzlich eine vergrößerte Detailansicht im Bereich der geblockten Druckverriegelungseinrichtung gezeigt ist, und
- Figur 14b: eine Seitenansicht des Anschlussverbinders gemäß Figur 14a, wobei zusätzlich eine vergrößerte Detailansicht im Bereich der geblockten Druckverriegelungseinrichtung gezeigt ist.

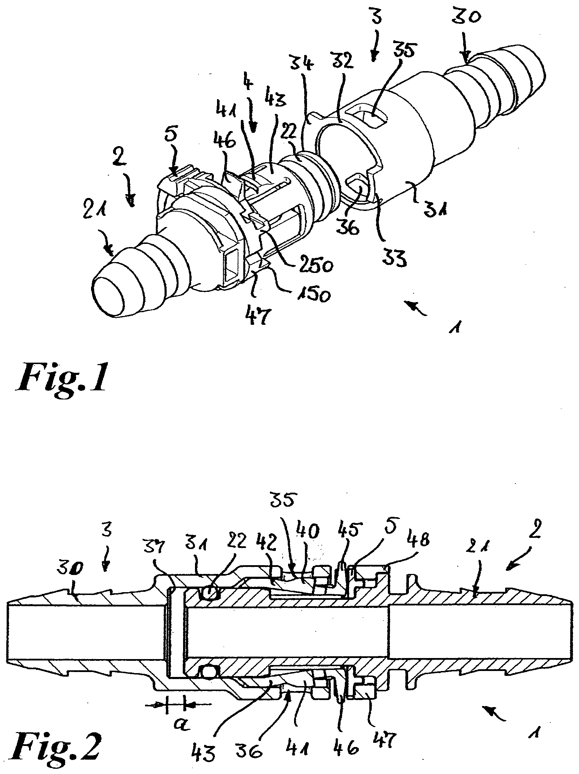

In Figur 1 ist ein Anschlussverbinder 1 gezeigt, der einen Steckerteil 2, einen Muffenteil 3, ein Halteelement 4, das auf den Steckerteil 2 aufgefügt ist, sowie eine Verriegelungseinrichtung in Form eines radial steckbaren Verriegelungselementes 5 umfasst. Der Anschlussverbinder 1 ist in Figur 1 im sogenannten Anlieferungszustand, also im Vormontagezustand gezeigt. Hierbei sind Steckerteil 2 und Muffenteil 3 noch nicht ineinander gesteckt, jedoch das Halteelement 4 auf einen Aufnahmeabschnitt 20 des Steckerteils 2 aufgesteckt. Außer einem Aufnahmeabschnitt 20 umfasst der Steckerteil 2 einen Dornabschnitt 21, über den eine Verbindung insbesondere mit einer Rohr- oder Schlauchleitung, die in Figur 1 nicht gezeigt ist, hergestellt werden kann. Eine solche Rohr- oder Schlauchleitung wird mit ihrem Ende auf den Dornabschnitt 21 aufgeschoben, also dort aufgedornt. Einen entsprechenden Dornabschnitt 30 weist auch der Muffenteil 3 auf, um auch dort insbesondere eine Rohr- oder Schlauchleitung durch Aufdornen befestigen zu können.

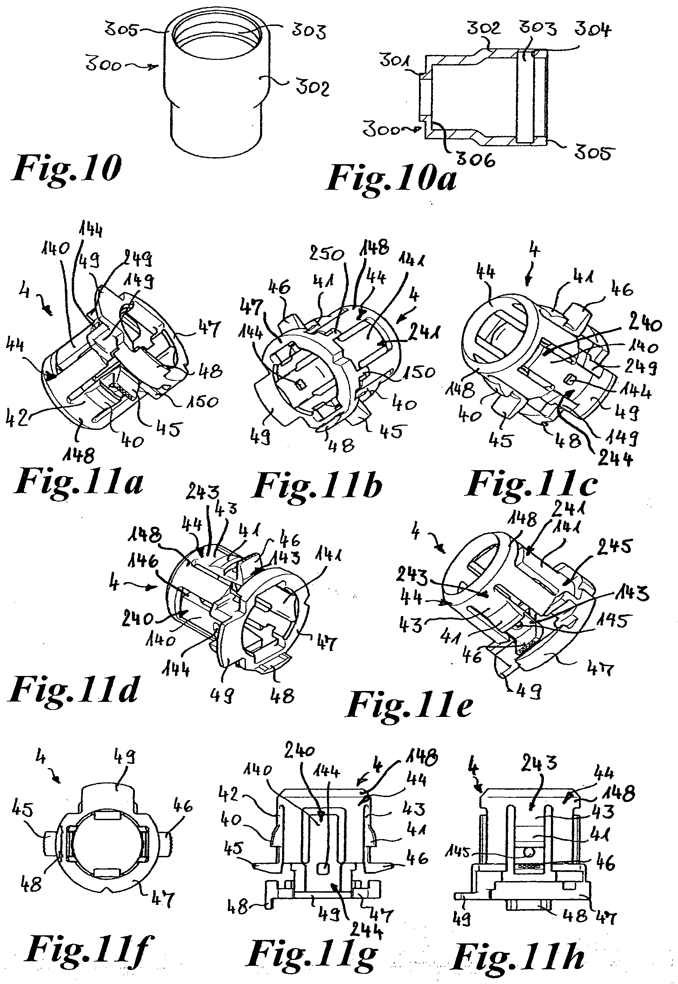

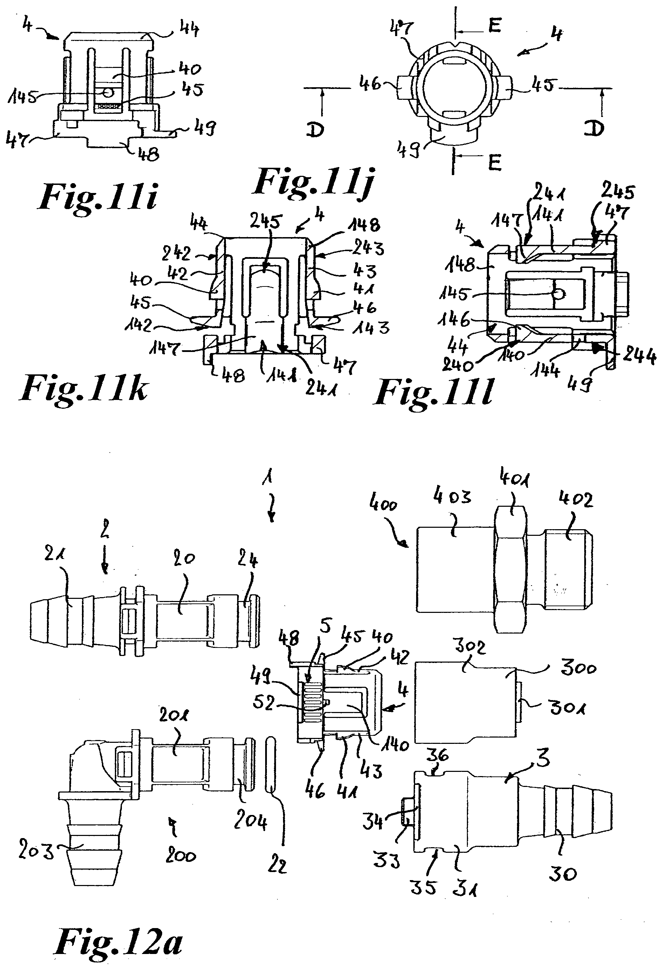

Der Muffenteil 3 weist ferner einen den Steckerteil 2 aufnehmenden Muffenabschnitt 31 auf, der endseitig mit einem in Axialrichtung des Muffenteils 3 angeordneten, über den oberen Rand 32 des Muffenabschnitts 31 des Muffenteils 3 vorkragenden Abschnitt 33 sowie einem radial vom oberen Rand 32 des Muffenabschnitts 31 etwa gegenüberliegend zu dem axial vorkragenden Abschnitt 33 abstehenden Abschnitt 34 versehen ist. Etwa 90° versetzt zu den beiden Abschnitten 33, 34 weist der Muffenabschnitt 31 des Muffenteils 3 zwei einander gegenüberliegende Fensteröffnungen 35, 36 auf, die als Verrastungsöffnungen für Rastnasen 40, 41 an dem Halteelement 4 dienen. Die Rastnasen 40, 41 sind nach außen weisend auf Haltearmen 42, 43 des Halteelementes 4 angeordnet, wie dies nicht nur Figur 1 entnommen werden kann, sondern besonders gut auch den Figuren 11a bis 11l, in denen das Halteelement 4 im Detail gezeigt ist. Das Halteelement 4 bzw. der Halteelementkörper 44 weist an seinen beiden einander gegenüberliegenden Enden einen endseitigen durchgehenden umlaufenden Rand auf, nämlich an dem einen Ende einen durchgehenden Rand 148 und an dem gegenüberliegenden anderen Ende des Halteelements 4 bzw. Halteelementkörpers 44 einen wulstartig vorstehenden endseitigen Rand 47. Die Haltearme 42, 43 und 140, 141 sind abwechselnd an dem einen Rand 148 und an dem anderen Rand 47 festgelegt, also der Haltearm 42 an dem Rand 148, der Haltearm 140 an dem Rand 47, der Haltearm 43 an dem Rand 148 und der Haltearm 141 an dem Rand 47. Die Haltearme 42, 43 weisen außer dem jeweiligen an dem Rand 148 bzw. an dem Halteelementkörper 44 festliegenden Ende 242, 243 jeweils ein dem gegenüberliegendes freies und in Radialrichtung (bezüglich des Halteelements 4 bzw. Halteelementkörpers 44) federelastisch bewegbares Ende 142, 143 auf, . Die Rastnasen 40, 41 sind an den beiden Haltearmen 42, 43 nicht endseitig, sondern entlang von deren Längserstreckung angeordnet, insbesondere etwa im mittleren Bereich zwischen dem freien Ende 142 bzw. 143 und dem festliegenden Ende 242, 243 der Haltearme 42, 43. Die Haltearme 140, 141 weisen ebenfalls außer dem jeweiligen an dem Rand 148 festliegenden Ende 244, 245 jeweils ein dem gegenüberliegendes freies und in Radialrichtung (bezüglich des Halteelements 4 bzw. Halteelementkörpers 44) federelastisch bewegbares Ende 240, 241 auf.

Endseitig an den freien Enden 142, 143 der Haltearme 42, 43 ragt etwa radial nach außen, also weg von dem Halteelementkörper 44 des Halteelements 4, jeweils ein Betätigungselement 45, 46. Durch Aufbringen einer radial nach innen bezüglich des Halteelementes 4 gerichteten Kraft können die Rastnasen 40, 41 aus einer Verrastungsposition in eine nicht verrastete Position verbracht werden, um den Steckerteil mit darauf aufgebrachtem Halteelement aus dem Muffenteil zu lösen, also die Rastnasen 40, 41 aus den Verrastungsöffnungen bzw.

Fensteröffnungen 35, 36 heraus zu bewegen und ein axiales Abziehen des Steckerteils 2 vom Muffenteil 3 bzw. umgekehrt des Muffenteils 3 vom Steckerteil 2 zu ermöglichen.

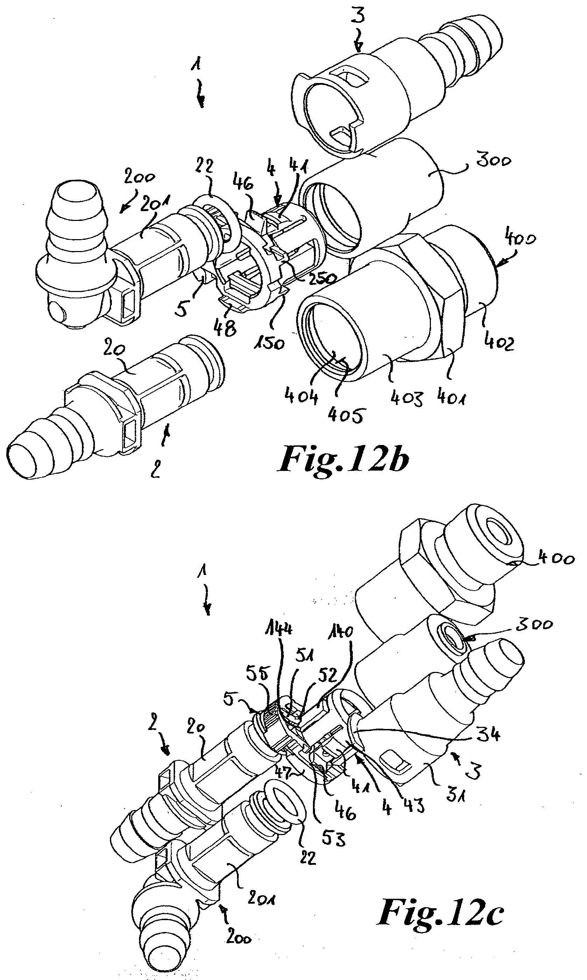

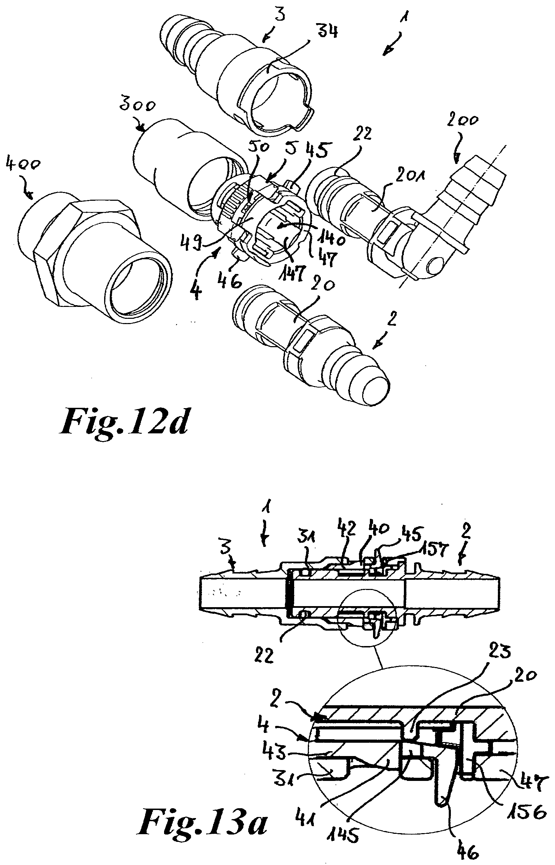

Wie insbesondere den Figuren 11a bis 11l weiter entnommen werden kann, weist das Halteelement 4 benachbart zu dem jeweiligen Betätigungselement 45, 46, jedoch mit Abstand zu diesem den wulstartig vorstehenden endseitigen Rand 47 auf. Am gegenüberliegenden Ende weist das Halteelement 4 den durchgehenden Rand 148 auf. Im Bereich des Betätigungselementes 45 ragt in Axialrichtung des Halteelementes 4 von dem wulstartig vorstehenden endseitigen Rand 47 ein Abschnitt 48 vor. Etwa 90° versetzt zu diesem, also zwischen den beiden Betätigungselementen 45, 46 bzw. den entsprechenden Haltearmen 42, 43, also an der Anordnungsstelle des Haltearms 140, benachbart zu dessen festliegenden Ende 244, ragt von dem wulstartig vorstehenden endseitigen Rand 47 radial nach außen ein Radialabschnitt 49 vor. Dieser dient dem Ineinandergreifen mit dem radial steckbaren Verriegelungselement 5, das eine entsprechende Nut bzw. Aussparung 50 (siehe Figur 12d) aufweist, in die der Radialabschnitt 49 eingreift. Benachbart zu dem Radialabschnitt 49 sind an dem Halteelementkörper 44 zwei axiale Stege 149, 249 angeordnet. Auf der dem Radialabschnitt 49 gegenüberliegenden Seite des Halteelementkörpers 44 ragen axial von dem wulstartig vorstehenden endseitigen Rand 47 zwei entsprechende axiale Stege 150, 250 vor, wie insbesondere Figur 1 sowie den Figuren 11a und 11b besonders gut entnommen werden kann. Der Abstand der beiden axialen Stege 150, 250 zueinander ist insbesondere so bemessen, dass der axial vorkragende Abschnitt 33 am oberen Rand 32 des Muffenabschnitts 31 des Muffenteils 3 in diesen eingreifen kann, um eine Positionierhilfe und auch Verdrehsicherung für den Muffenteil 3 gegenüber dem mit dem Halteelement 4 versehenen Steckerteil 2 vorzusehen.

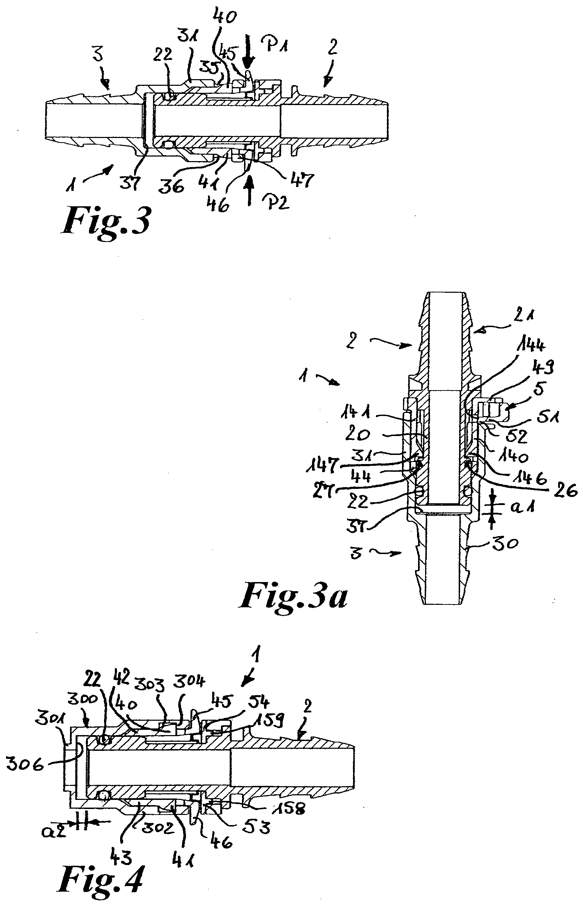

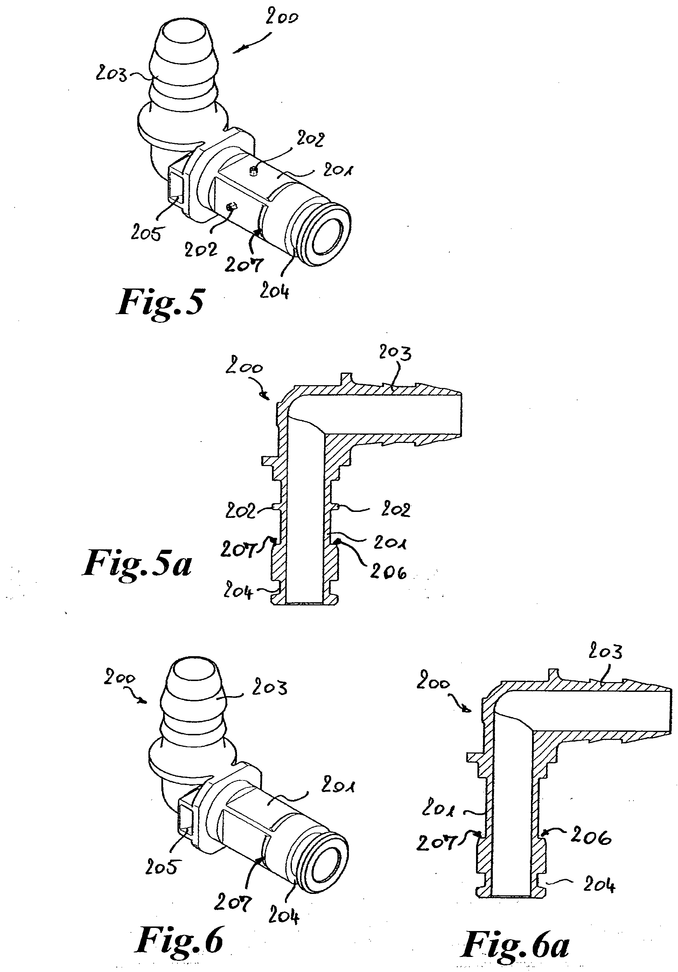

Im Bereich der jeweiligen axialen Stege 149, 249 bzw. 150, 250 ist der Halteelementkörper 44 zungenförmig ausgebildet und erstreckt sich als mit dem bereits erwähnten freien Ende 240 bzw. 241 versehener Haltearm 140 bzw. 141 in Längsrichtung bzw. Axialrichtung des Halteelementkörpers 44. Auch die beiden Haltearme 140, 141 weisen jeweils eine Rastnase 146, 147 auf, die allerdings nach innen in Richtung des Aufnahmeabschnitts 20 des Steckerteils 2 gerichtet sind (siehe insbesondere Figuren 11l). Die Rastnasen 146, 147 sind endseitig an den Haltearmen 140, 141 angeordnet, also an den freien Enden 240, 241 der beiden Haltearme 140, 141. Die Haltearme 140, 141 sind endseitig im Bereich ihrer freien Enden 240, 241, im Hinblick auf das Halteelement 4 radial auslenkbar zum Verrasten an einer Rastfläche bzw. einem Rastabsatz bzw. Rastelement des Steckerteils. Mit den Rastnasen 146, 147 halten sie sich an einem entsprechend geformten Rastabsatz bzw. Absatz oder Rastelement bzw. Element auf der Außenseite des Aufnahmeabschnitts 20 des Steckerteils 2 fest, kommen mit diesem in Eingriff (siehe zum Beispiel Figur 3a). Wie in Figur 3a zu sehen, greifen die Rastnasen 146, 147 der beiden Haltearme 140, 141 in die entsprechenden Nuten oder abgeflachten Abschnitte am Umfang des Aufnahmeabschnitts 20 des Steckerteils 2 ein und stützen sich in diesem und auf dessen Oberfläche ab in Abzugsrichtung des Muffenteils 3 von dem Steckerteil 2 an einem jeweiligen Absatz 26, 27 des Steckerteils 2, der den Aufnahmeabschnitt 20 begrenzt bzw. an einem jeweiligen Absatz 206, 207 des Steckerteils 200 (siehe auch Figuren 5, 5a, 6, 6a). Hierbei bleibt allerdings weiterhin ein gewisses Maß an axialer Bewegbarkeit bzw. Beweglichkeit des Halteelements 4 gegenüber dem Steckerteil 2 bzw. auf dessen Aufnahmeabschnitt 20 bestehen.

Über den Umfang des Halteelements 4 um jeweils 90 ° versetzt zueinander sind abwechselnd somit die beiden Haltearme 140, 141 mit ihren nach innen weisenden Rastnasen 146, 147 zum Festhalten an dem Steckerteil 2 bzw. dessen Aufnahmeabschnitt 20 und die beiden Haltearme 42, 43 mit ihren nach außen weisenden Rastnasen 40, 41 zum Festhalten an dem Muffenteil 3 angeordnet. Dabei sind die einander gegenüberstehenden Haltearme 140, 141 an dem Rand 47 und die beiden einander gegenüberstehenden Haltearme 42, 43 an dem Rand 148 festgelegt..Die freien Enden 240, 241 der beiden Haltearme 140, 141 erstrecken sich bis nahezu an den und enden mit Abstand zu dem Rand 148, angeordnet zwischen den beiden festliegenden Enden 242, 243 der beiden benachbarten Haltearme 42, 43. Die freien Enden 142, 143 der beiden Haltearme 42, 43 erstrecken sich bis nahezu an den und enden mit Abstand zu dem Rand 47, angeordnet zwischen den beiden festliegenden Enden 244, 245 der beiden benachbarten Haltearme 140, 141, wie insbesondere den Figuren 11k und 11l entnommen werden kann.

Zumindest der Haltearm 140 weist im Bereich zwischen den beiden axialen Stegen 149, 249 eine Durchgangsöffnung 144 auf, die in Form eines kleinen Fensters ausgebildet ist. In diese Durchgangsöffnung 144 kann ein Sperrelement 51 des radial steckbaren Verriegelungselementes 5 eingreifen und sich an dem die Durchgangsöffnung 144 umgrenzenden Rand verrastend festhalten oder sich in der Vormontageposition auf der Außenseite des Haltearms 140 neben der Durchgangsöffnung 144 abstützen. Das Sperrelement 51 weist zu diesem Zweck endseitig eine Rastnase 52 auf (siehe Figur 12c).

Die beiden einander gegenüberliegenden Haltearme 42, 43 werden beim Aufschieben des Muffenteils 3 mit seinem Muffenabschnitt 31 auf den auf seinem Aufnahmeabschnitt 20 mit dem Halteelement 4 versehenen Steckerteil 2 radial in Richtung des Aufnahmeabschnitts 20 des Steckerteils 2 gedrückt. Dies ist insbesondere der Figur 2 zu entnehmen. Der Muffenabschnitt 31 drückt beim Überqueren der Rastnasen 40, 41 die Haltearme 42, 43, an denen die Rastnasen 40, 41 angeordnet sind, radial in Richtung des Aufnahmeabschnitts 20 des Steckerteils 2. Hierbei tauchen auch die Betätigungselemente 45, 46 radial in Richtung des Steckerteils ein bzw. weichen zurück, so dass sie weniger weit über die äußere Erstreckung des Halteelementkörpers 44 vorstehen als in der Vormontageposition, die in Figur 1 gezeigt ist. Dies kann insbesondere dem Vergleich der Figuren 2 und 1 entnommen werden. Es ist optisch und gegebenenfalls auch haptisch beim Darüberstreichen erkennbar, dass ein unvollständiger Steckvorgang von Steckerteil 2 und Muffenteil 3 hier vorliegt.

In der in Figur 2 gezeigten noch nicht vollständigen Steckposition von Steckerteil 2 und Muffenteil 3 liegt ein Dichtring bzw. O-Ring 22, der auf einem endseitigen Abschnitt des Steckerteils 2 in einer umlaufenden Nut liegt, der als erstes und dementsprechend tief in den Muffenabschnitt 31 des Muffenteils 3 eingesteckt wird, dichtend an der Innenfläche des Muffenabschnitts 31 in diesem Bereich an, wie insbesondere besonders gut Figur 2 entnommen werden kann. Dort ist insbesondere auch erkennbar, dass der Steckerteil 2 noch nicht vollständig in den Muffenteil 3 eingesteckt ist, da die Rastnasen 40, 41 noch nicht in den Verrastungsöffnungen 35, 36 des Muffenabschnitts 31 des Muffenteils 3 einrasten können.

Die vollständig gesteckte Endposition von Steckerteil 2 und Muffenteil 3 ist in Figur 3 und 3a gezeigt. Optisch und haptisch ist dies insbesondere bereits durch die wieder weit über die Oberfläche des Halteelementes 4 radial vorstehenden Betätigungselemente 45, 46 von diesem erkennbar. Wie insbesondere in Figur 3 erkennbar, liegen die Rastnasen 40, 41 in verrasteter Position in den beiden Verrastungsöffnungen 35, 36 im Muffenabschnitt 31 des Muffenteils 3. Die Rastnasen 40, 41 stützen sich in den Verrastungsöffnungen 35, 36 ab und verriegeln somit die eingenommene Verrastungsposition von Steckerteil mit darauf aufgefügtem Halteelement 4 und Muffenteil 3. Da der Muffenabschnitt 31 nicht mehr radial gegen die Rastnasen 40, 41 und somit die Haltearme 42, 43 drückt, können diese in die Ausgangsposition oder Vormontageposition, wie sie auch in Figuren 1 gezeigt ist, zurückfedern, so dass die Betätigungselemente 45, 46 radial wieder weit nach außen über die Oberfläche des benachbart zu den Betätigungselementen 45, 46 angeordneten Halteelementkörpers 44 hinausragen. Dies ist insbesondere Figur 3 zu entnehmen. Ein Lösen der Rastverbindung der Rastnasen 40, 41 in den Verrastungsöffnungen 35, 36 des Muffenabschnitts 31 des Muffenteils 3 kann durch Ausüben einer Druckkraft radial in Richtung des Steckerteils 2, wie durch die Pfeile P1 und P2 angedeutet, erfolgen. Nach dem Einfädeln und Verrasten der Rastnasen 40, 41 in den Verrastungsöffnungen 35, 36 des Muffenteils 3 ist das Halteelement 4, das auf den Steckerteil 2 aufgesteckt ist, verliersicher auf diesem gehalten und die Steckposition von Steckerteil 2 mit Halteelement 4 und Muffenteil 3 gesichert bzw. gesperrt.

Wie insbesondere den Figuren 3a und 3 entnommen werden kann, kann zwischen der Frontseite des Steckerteils 2, also dem Abschnitt des Steckerteils, der über den O-Ring 22 gegenüber der Innenseite des Muffenabschnitts 31 abgedichtet ist, und dem Absatz 37 im Muffenabschnitt 31 weiterhin ein Abstand verbleiben, der in Figur 3a mit a1 gezeigt ist. In Figur 2 ist hingegen mit a der Abstand der Frontseite des Steckerteils 2 von der Innenseite des Muffenabschnitts 31 bezeichnet, der sich aufgrund der nicht verrasteten, also nur unvollständig gesteckten, Position von Steckerteil und Muffenteil ergibt .

Im Unterschied zu der Ausführungsform nach den Figuren 1 bis 3a ist der Muffenteil 300 nach Figur 4 als Zerspanungsteil, insbesondere hergestellt aus Metall, ausgebildet und weist endseitig keinen Dornabschnitt auf. Anstelle dessen ist der Muffenteil 300 mit einem kleinen Befestigungsstutzen 301 beispielsweise zum Verbinden mit einer Rohrleitung versehen. Über den Befestigungsstutzen 301 ist somit eine Verbindung zu einer Rohrleitung oder auch einem Aggregat möglich. Im Schnitt ist der Befestigungsstutzen 301 besonders gut Figur 4 zu entnehmen. Zum Verbinden mit einer Rohrleitung, einem Aggregat, einer Maschine etc. können unterschiedliche Ausgestaltungen von Anschlüssen des Anschlussverbinders 1 vorgesehen sein, wie eine Ausgestaltung als Muffenteil oder -abschnitt, Dornabschnitt, Gewindeabschnitt etc. Auch zwei Kupplungsteile können an den beiden Seiten/Enden des Anschlussverbinders vorgesehen sein bzw. des Muffenteils und/oder des Steckerteils oder eines Anschlusses in oder an einer Maschine, mit der der Anschlussverbinder verbunden werden soll.

Der Muffenteil 300 weist ebenso wie der Muffenteil 3 einen Muffenabschnitt 302 auf, der jedoch anstelle der Verrastungsöffnungen 35, 36 des Muffenabschnitts 31 des Muffenteils 3 eine inwandige Verrastungsnut 303 mit Verrastungsfläche 304 aufweist. Dies ist ebenfalls besonders gut Figur 4 zu entnehmen. In die Verrastungsnut 303 greifen die Rastnasen 40, 41 an den Haltearmen 42, 43 des Halteelementes 4, das wiederum auf dem Steckerteil 2 angeordnet ist, rastend ein, wobei sie sich an der Verrastungsfläche 304 abstützen. Dementsprechend ragen auch wiederum die beiden Betätigungselemente 45, 46 über die Oberfläche des Muffenabschnitts 302 bzw. des wulstartig vorstehenden endseitigen Randes 47 des Halteelementes 4 auf dem Steckerteil 2 hinaus. Der Muffenteil 300 kann beispielsweise aus zumindest einem Metall, wie insbesondere Aluminium, Messing, Stahl oder einer Legierung, wie einer Aluminiumlegierung, bestehen. Demgegenüber kann der Muffenteil 3, der mit dem Dornabschnitt 30 versehen ist, beispielweise aus einem Kunststoffmaterial bestehen. Ebenfalls kann der Muffenteil, in beiden Ausgestaltungen, aus zumindest einem Kunststoffmaterial oder aus zumindest einem Metall oder aus einer Kombination aus zumindest einem Kunststoffmaterial und zumindest eines Metalls bestehen. Der Steckerteil 2 kann sowohl aus Kunststoffmaterial als auch aus einem Metall, wie Aluminium oder einer Aluminiumlegierung, bestehen. Die jeweilige Materialwahl von Steckerteil und Muffenteil kann von dem jeweiligen Anwendungsfall abhängig gemacht werden, also insbesondere Steckerteil und Muffenteil aus demselben Material oder aus unterschiedlichen Materialien, insbesondere Kunststoff und/oder Metall, bestehen. Auch das Halteelement kann aus einem oder mehreren Kunststoffmaterial(ien) und/oder einem oder mehreren Metall(en) bestehen.

In der verrasteten Endposition von Steckerteil 2 mit darauf aufgefügtem Halteelement 4 und Muffenteil 300 verbleibt, zumindest in der gezeigten Ausführungsform, ein Abstand a2 zwischen der Frontseite des Steckerteils 2, wobei wiederum der O-Ring 22 auf dem Steckerteil zum Abdichten des Steckerteils gegenüber der Innenfläche des Muffenabschnitts 302 dient, und einem Absatz 306 im Muffenteil 300, wie Figur 4 und Figur 10a entnommen werden kann.

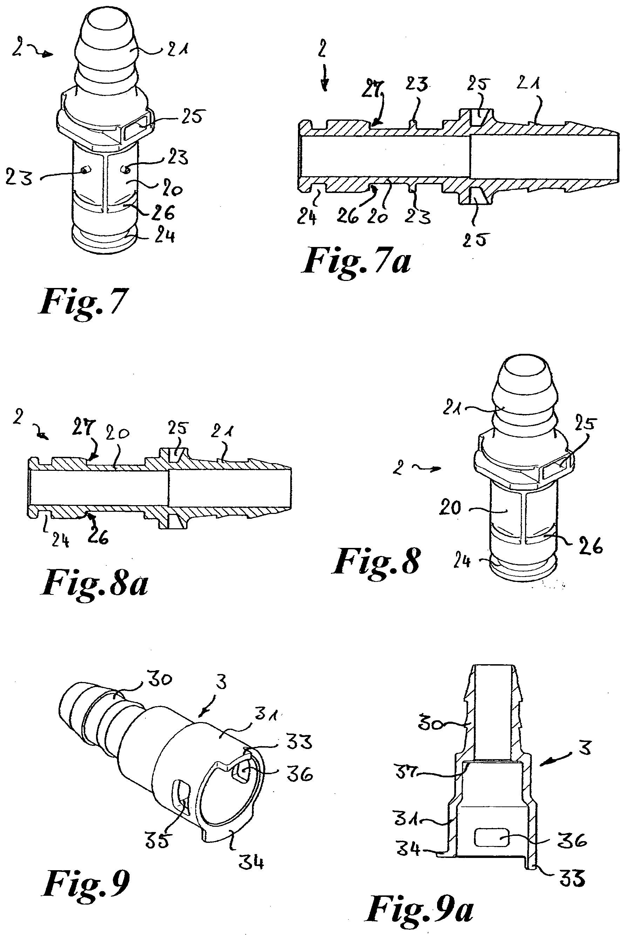

In den vorstehend beschriebenen Figuren sind jeweils gerade Steckerteile und gerade Muffenteile gezeigt. Demgegenüber zeigen die Figuren 5, 5a und 6, 6a Winkel-Steckerteile 200. In den Figuren 7, 7a sowie 8, 8a sind jeweils noch einmal gerade Steckerteile 2 gezeigt. Bei allen Steckerteilen 2 und 200 ist jeweils der Aufnahmeabschnitt 20 bzw. 201 mehrkantig ausgebildet, um eine Verdrehsicherung für das dort aufgefügte Halteelement 4 vorzusehen. Ebenso ist es jedoch auch möglich, den Steckerteil 2 bzw. 200 mit einem runden Querschnitt im Bereich seines Aufnahmeabschnitts 20 bzw. 201 auszubilden. Insbesondere dann, wenn das Vorsehen einer Verdrehsicherung dort nicht erforderlich ist oder wenn eine andere Art einer Verdrehsicherung vorgesehen ist, kann der Steckerteil durchgängig im Querschnitt rund ausgebildet werden. Auch Mischformen eines runden Querschnitts und von abgeflachten Abschnitten oder zumindest eines abgeflachten Abschnitts sind entlang der Umfangsfläche insbesondere des Aufnahmeabschnitts 20 bzw. 201 des Steckerteils 2 bzw. 200 möglich.

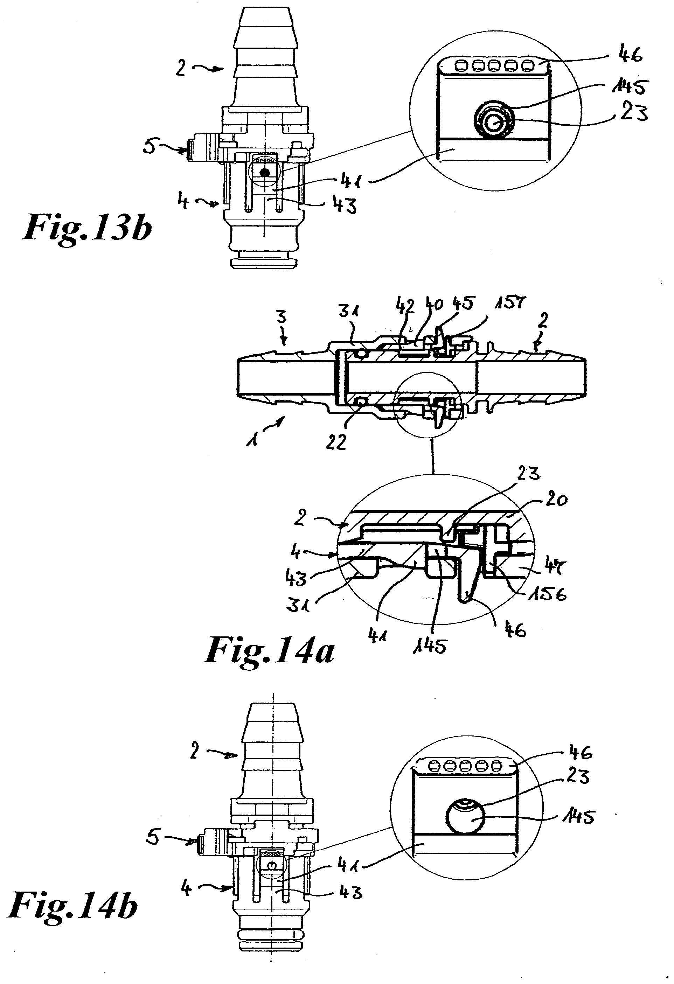

Bei dem Steckerteil 200 nach Figur 5 und dem Steckerteil 2 nach Figur 7 sind auf jeder der vier Flächen des mehrkantigen jeweiligen Aufnahmeabschnitts 20 bzw. 201 vorkragende Stiftelemente 23 bzw. 202 vorgesehen. Die vorkragenden Stiftelemente 23 bzw. 202 dienen einer Druckverriegelung bei im Innern des Steckerteils 2 bzw. 200 anliegendem Druck, also bei dort hindurch strömendem, unter Druck stehendem Medium. Zur Druckverriegelung liegen die vorkragenden Stiftelemente 23, 202 durch Verschiebung des Halteelements 4 gegenüber dem Steckerteil 2 in Axialrichtung des Halteelements 4 außerhalb einer jeweiligen Öffnung 145 in den Haltearmen 42, 43. Hierdurch wird ein radiales Bewegen der Haltearme 42, 43 blockiert, wie in Figur 14a und 14b gezeigt. Es wird somit ein solches axiales Spiel des Halteelements 4 auf dem Aufnahmeabschnitt 20 des Steckerteils 2 vorgesehen, dass dieses mindestens ausreichend weit von der Öffnung 145 zum Eintauchen des zumindest einen vorkragenden Stiftelements 23, 202 entfernt ist, so dass sich die Haltearme 42, 43 dann nicht in einer Löseposition befinden, wenn das vorkragende Stiftelement 23, 202 sich außerhalb der Öffnung 145 befindet. Durch die bei Anliegen eines Drucks im Innern des Anschlussverbinders 1 auftretende Axialverschiebung zwischen dem Steckerteil 2 und dem Halteelement 4 werden die vorkragenden Stiftelemente 23, 202 aus dem Bereich des Fluchtens mit den Öffnungen 145 heraus verschoben und sperren somit die Haltearme 42, 43 radial. Ein Betätigen der Haltearme 42, 43, um deren Rastnasen 40, 41 aus der Verrastung in den Verrastungsöffnungen 35, 36 in dem Muffenteil 3 zu lösen, wird somit in dieser Position unterbunden. Lediglich in der nicht axial verschobenen Position von Halteelement 4 und Steckerteil 2 ist ein Eintauchen der vorkragenden Stiftelemente 23, 202 in die Öffnungen 145 möglich und somit ein Betätigen der Haltearme 42, 43 nur ohne anliegenden Mediendruck im Innern des Anschlussverbinders 1. Die Öffnungen 145 in den beiden Haltearmen 42, 43 können insbesondere den Figuren 11e, 11h, 11i und 11l entnommen werden. In den Figuren 13a und 13b ist eine solche freigegebene Druckverriegelung gezeigt, während die Figuren 14a und 14b eine geblockte Druckverriegelung zeigen, bei der es den vorkragenden Stiftelementen 23 bzw. 202 nicht möglich ist, in die jeweilige Öffnung 145 in den beiden Haltearmen 42, 43 einzutauchen. Für eine Druckverriegelung ist somit eine axiale Beweglichkeit des Halteelements gegenüber dem Steckerteil vorgesehen. Wenn kein Mediendruck im Innern des Anschlussverbinders anliegt, ist ein Lösen des Steckerteils aus dem Muffenteil möglich. Hierbei kann durch manuelles Hineinstecken des Steckerteils 2 bis zum Anschlag, also bis in die weitestmögliche Position im Innern des Muffenteils, eine manuelle Entriegelung der Rastnasen 40, 41 der Haltearme 42, 43 aus ihrer Verrastung in den Öffnungen 35, 36 erfolgen.

Außer durch die Winkelform unterscheiden sich die Steckerteile 2 und 200 nach den Figuren 5, 5a, 6, 6a, 7, 7a und 8, 8a nicht, da alle Steckerteile zum Aufdornen von insbesondere Rohr- oder Schlauchleitungen ausgebildet sind und dementsprechend jeweils einen Dornabschnitt 21 bzw. 203 aufweisen.

Wie den Steckerteilen 2 bis 200 in den Figuren 5 bis 8a, jedoch auch den übrigen Steckerteilen in den vorstehend bereits beschriebenen Figuren zu entnehmen ist, weisen diese jeweils nicht nur eine Aufnahmenut 24 bzw. 204 zum Aufnehmen des Dichtrings bzw. O-Rings 22 an einem Ende auf, sondern zwischen dem Aufnahmeabschnitt 20 bzw. 201 und dem jeweiligen Dornabschnitt 21 bzw. 203 eine jeweilige Angriffsöffnung bzw. zwei einander gegenüberliegende Angriffsöffnungen 25, 205. Diese dienen dem Angreifen beispielsweise durch einen Roboterarm zum Bewerkstelligen einer automatisierten Montage der Anschlussverbinder 1. Anstelle solcher Angriffsöffnungen 25, 205 können auch anderweitige Angriffsflächen vorgesehen werden, die bei einer automatisierten Montage von Robotern ergriffen bzw. an denen angegriffen werden kann, um einerseits den jeweiligen Steckerteil 2 bzw. 200 mit dem jeweiligen Halteelement 4 zu versehen und andererseits eine korrekte Montage des Halteelementes 4 auf dem Steckerteil zu ermöglichen, ebenso nachfolgend eine korrekte Montage des radial steckbaren Verriegelungselementes 5 an dem Halteelement 4 und gegebenenfalls auch des jeweiligen Muffenteils 3 bzw. 300 an Steckerteil mit Halteelement und radial steckbarem Verriegelungselement.

Die Figuren 9, 9a und 10, 10a zeigen noch einmal einzeln den Muffenteil 3 und den Muffenteil 300. Bei dem Muffenteil 300 ist deutlich der endseitig angeordnete Befestigungsstutzen 301 zu sehen, ebenfalls die im Innern des Muffenabschnitts 302 vorgesehene Verrastungsnut 303 mit ihrer Verrastungsfläche 304 zum Angreifen einer jeweiligen Rastnase 40 bzw. 41 der Haltearme 42, 43 des Halteelementes 4, das auf den jeweiligen Steckerteil 2 bzw. 200 aufgefügt wird. Ebenfalls ist beim Vergleich des Muffenteils 3 mit dem Muffenteil 300 ersichtlich, dass bei dem als Zerspanungsteil aus einem Metall ausgebildeten Muffenteil 300 am oberen Rand 305 weder radial noch axial Abschnitte vorstehen, somit kein Ineinandergreifen mit entsprechenden Nuten oder Stegen, wie den axialen Stegen 150, 250 vorgesehen wird. Dies begründet sich insbesondere damit, dass keine Verrastungsöffnungen in Form von Fensteröffnungen 35, 36 vorgesehen sind, die möglichst exakt von den Rastnasen 40, 41 durchgriffen werden müssen, um ein Verrasten der Rastnasen 40, 41 dort zu bewirken, sondern die Verrastungsnut 303 vorgesehen ist, die umlaufend im Innern des Muffenabschnitts 302 vorgesehen ist, so dass die jeweilige Position der Rastnasen 40, 41 entlang der Verrastungsnut 303 bezogen auf deren umlaufende Erstreckung wahlfrei ist. Anders ist dies, wie bereits vorstehend erläutert, bei dem mit den Fensteröffnungen bzw. Verrastungsöffnungen 35, 36 versehenen Muffenteil 3, bei dem sowohl der axial vorkragende Abschnitt 33 als auch der radial abstehende Abschnitt 34 für eine korrekte Positionierung des Muffenteils 3 am Steckerteil 2 oder Steckerteil 200 mit darauf jeweils aufgefügtem Halteelement 4 sorgen.

Die Figuren 12a bis 12d zeigen nach Art eines Baukastens die verschiedenen Arten von Steckerteilen und Muffenteilen, die miteinander beliebig kombiniert werden können. Zum Verrasten von Steckerteil und Muffenteil ist dabei jeweils das Halteelement 4 vorgesehen und zum zusätzlichen Sperren der verrasteten Position von Steckerteil mit Halteelement und Muffenteil das radial steckbare Verriegelungselement 5 an dem Halteelement 4. Zum Abdichten des Steckerteils 2 bzw. 200 in dem jeweiligen Muffenteil ist ferner auch der Dichtring bzw. O-Ring 22 gezeigt.

Anstelle der bereits vorstehend beschriebenen Muffenteile 3 mit Dornabschnitt 30 und Muffenteil 300 in Form eines Zerspanungsteils ist zusätzlich in den Figuren 12a bis 12d die Ausführungsvariante eines Muffenteils 400 mit einem Sechskantabschnitt 401 gezeigt, wobei der Muffenteil 400 zum Schraubverbinden mit einer Rohrleitung oder einem Aggregat vorgesehen ist, wobei über den Sechskantabschnitt entsprechend ein Angreifen und Festhalten beim Aufschrauben des Muffenteils 400 möglich ist. Zum Verbinden mit einer Rohrleitung weist der Muffenteil 400 einen Verbindungsabschnitt 402 auf. Über einen Muffenabschnitt 403 ist wiederum eine Verbindung mit dem Steckerteil 2 bzw. 200 mit darauf aufgefügtem Halteelement 4 möglich. Der Muffenabschnitt 403 weist, entsprechend dem Muffenabschnitt 302 des Muffenteils 300 ebenfalls eine Verrastungsnut 404 mit Verrastungsfläche 405 zum Verrasten der Rastnasen 40 bzw. 41 an den Haltearmen 42 bzw. 43 des Halteelementes 4 auf.

Es können somit wahlweise beispielsweise die drei Ausführungsvarianten von Muffenteilen 3, 300 bzw. 400 mit einem der Ausführungsvarianten von Steckerteilen 2 bzw. 200 kombiniert werden. In den Figuren 12a bis 12d sind die Steckerteile 2 bzw. 200 jeweils ohne vorkragende Stiftelemente 23 bzw. 202 gezeigt. Diese können zum Vorsehen einer Druckverriegelung jedoch ebenfalls auf den jeweiligen Aufnahmeabschnitten 20 bzw. 201 angeordnet sein.

Zusätzlich zu den im Vorstehenden beschriebenen und in den Ausführungsbeispielen gezeigten Ausführungsvarianten von Anschlussverbindern, die insbesondere für Schlauch- und/oder Rohrleitungen vorgesehen sind, und Halteelementen für solche können noch zahlreiche weitere gebildet werden, auch beliebige Kombinationen der vorstehend genannten Merkmale der jeweiligen Halteelemente und Anschlussverbinder, bei denen jeweils zumindest ein Muffenteil und zumindest ein Steckerteil vorgesehen sind, wobei der Steckerteil in einen Muffenabschnitt des Muffenteils einsteckbar oder eingesteckt ist und wobei das Halteelement zum lösbaren Verriegeln des Steckerteils in den Muffenteil vorgesehen ist, wobei das Halteelement auf einen Aufnahmeabschnitt des Steckerteils verliersicher montierbar oder montiert ist und zumindest einen Abschnitt aufweist, der radial aufweitbar ist und zumindest einen Haltearm umfasst, der mit zumindest einer außenseitig auskragenden Rastnase versehen ist, wobei der Haltearm in radialer Richtung bezüglich des Steckerteils federelastisch bewegbar ist, um die zumindest eine Rastnase an zumindest einer Verrastungsfläche oder Verrastungsöffnung des Muffenteils zu verrasten und aus der Verrastungsposition wieder lösen zu können. Das Halteelement für einen solchen Anschlussverbinder ist oder wird auf den Steckerteil aufgesteckt zum lösbaren Halten des Steckerteils in dem Muffenteil und weist einen Halteelementkörper, Haltearme mit nach innen bezüglich des Halteelements gerichteten Rastnasen, die zum Befestigen an dem Steckerteil dienen, Haltearme mit nach außen bezüglich des Halteelements gerichteten Rastnasen, die zum Verbinden mit dem Muffenteil dienen, und axial beidseitig endseitig einen unterbrechungsfreien, durchgehenden Rand auf, wobei die Haltearme jeweils ein freies und in radialer Richtung federelastisch bewegbares Ende und ein diesem gegenüberliegendes, an dem Halteelementkörper festliegendes Ende aufweisen und die festliegenden Enden der Haltearme jeweils abwechselnd an den beiden durchgehenden endseitigen Rändern des Halteelements befestigt sind bzw. festliegen, wobei benachbarte Haltearme mit ihren festliegenden Enden nicht an dem gleichen durchgehenden endseitigen Rand befestigt sind, sondern der eine Haltearm an dem einen endseitigen durchgehenden Rand und der andere an dem gegenüberliegenden anderen endseitigen durchgehenden Rand befestigt ist bzw. festliegt.

### Bezugszeichenliste

- 1: Anschlussverbinder
- 2: Steckerteil
- 3: Muffenteil
- 4: Halteelement
- 5: radial steckbares Verriegelungselement
- 20: Aufnahmeabschnitt
- 21: Dornabschnitt
- 22: Dichtring/O-Ring
- 23: vorkragendes Stiftelement
- 24: Aufnahmenut
- 25: Angriffsöffnung
- 26: Absatz
- 27: Absatz
- 30: Dornabschnitt
- 31: Muffenabschnitt
- 32: oberer Rand
- 33: axial vorkragender Abschnitt
- 34: radial abstehender Abschnitt
- 35: FensteröffnungNerrastungsöffnung
- 36: Fensteröffnung/Verrastungsöffnung
- 37: Absatz
- 40: Rastnase
- 41: Rastnase
- 42: Haltearm
- 43: Haltearm
- 44: Halteelementkörper
- 45: Betätigungselement
- 46: Betätigungselement
- 47: wulstartig vorstehender endseitiger Rand
- 48: vorkragender Abschnitt
- 49: - Radialabschnitt
- 50: Nut/Aussparung
- 51: Sperrelement
- 52: Rastnase
- 53: Schenkel
- 55: Querabschnitt
- 140: Haltearm
- 141: Haltearm
- 142: freies Ende
- 143: freies Ende
- 144: Durchgangsöffnung
- 145: Öffnung
- 146: Rastnase an 140
- 147: Rastnase an 141
- 148: durchgehender Rand
- 149: axialer Steg
- 150: axialer Steg
- 156: Verliersicherungsabschnitt
- 157: Verliersicherungsabschnitt
- 158: Führungssteg
- 159: Führungssteg
- 200: Winkelsteckerteil
- 201: Aufnahmeabschnitt
- 202: vorkragendes Stiftelement
- 203: Dornabschnitt
- 204: Aufnahmenut
- 205: Angriffsöffnung
- 206: Absatz
- 207: Absatz
- 240: freies Ende
- 241: freies Ende
- 242: festliegendes Ende
- 243: festliegendes Ende
- 244: festliegendes Ende
- 245: festliegendes Ende
- 249: axialer Steg
- 250: axialer Steg
- 300: Muffenteil
- 301: Befestigungsstutzen
- 302: Muffenabschnitt
- 303: Verrastungsnut
- 304: Verrastungsfläche
- 305: oberer Rand
- 306: Absatz im Muffenteil
- 400: Muffenteil
- 401: Sechskantabschnitt
- 402: Verbindungsabschnitt
- 403: Muffenabschnitt
- 404: Verrastungsnut
- 405: Verrastungsfläche
- a: Abstand zwischen Frontseite Steckerteil 2 und Absatz 37 im Muffenteil 3 in nicht verrasteter Position
- a1: Abstand zwischen Frontseite Steckerteil 2 und Absatz 37 im Muffenteil 3 in Endposition
- a2: Abstand zwischen Frontseite Steckerteil 2 und Absatz 306 im Muffenteil 300 in Endposition
- P1: Druckkraft
- P2: Druckkraft

## Patentansprüche

1. Anordnung eines Halteelements (4) und eines Steckerteils (2, 200) für einen Anschlussverbinder (1), der zumindest einen Muffenteil (3,300,400) und zumindest den Steckerteil (2,200) umfasst, wobei der Steckerteil (2,200) in einen Muffenabschnitt (31,302,403) des Muffenteils (3,300,400) einsteckbar oder eingesteckt ist, wobei das Halteelement (4) auf dem Steckerteil (2,200) montiert ist zum lösbaren Halten des Steckerteils (2,200) in dem Muffenteil (3,300,400), wobei das Halteelement (4) einen Halteelementkörper (44), erste Haltearme (140,141) mit nach innen bezüglich des Halteelements (4) gerichteten Rastnasen (146,147), zweite Haltearme (42,43) mit nach außen bezüglich des Halteelements (4) gerichteten Rastnasen (40,41) und axial beidseitig endseitig einen unterbrechungsfreien, durchgehenden Rand (47,148) aufweist, **dadurch gekennzeichnet, dass**
die ersten (140, 141) und zweiten (42, 43) Haltearme jeweils ein freies und in radialer Richtung federelastisch bewegbares Ende und ein diesem gegenüberliegendes, an dem Halteelementkörper (44) festliegendes Ende aufweisen, um die Rastnasen (40, 41) der zweiten Haltearme (42, 43) an einer Verrastungsfläche oder Verrastungsöffnung des Muffenteils zu verrasten und aus der Verrastungsposition wieder lösen zu können, wobei an endseitig freien Enden (142,143) der zweiten mit nach außen bezüglich des Halteelements (4) gerichteten Rastnasen (40,41) versehenen Haltearme (42,43) ein Betätigungselement (45,46) radial nach außen ragt zum Lösen aus der Verrastungsposition.

2. Anordnung nach Anspruch 1,
**dadurch gekennzeichnet, dass**
die Rastnasen (40,41) an den zweiten Haltearmen (42,43) entlang von deren Längserstreckung angeordnet sind, insbesondere im mittleren Bereich zwischen dem freien Ende (142,143) und dem festliegenden Ende (242,243) der zweiten Haltearme (42,43).

3. Anordnung nach Anspruch 1 oder 2,
**dadurch gekennzeichnet, dass**
benachbart zu dem jeweiligen Betätigungselement (45,46), mit Abstand zu diesem der unterbrechungsfreie, durchgehende endseitige Rand (47) wulstartig vorsteht.

4. Anordnung nach Anspruch 3,
**dadurch gekennzeichnet, dass**
im Bereich des einen Betätigungselementes (45) in Axialrichtung des Halteelementes (4) von dem wulstartig vorstehenden endseitigen Rand (47) ein Abschnitt (48) vorragt.

5. Anordnung nach einem der Ansprüche 3 oder 4,
**dadurch gekennzeichnet, dass**
axial von dem wulstartig vorstehenden endseitigen Rand (47) zwei axiale Stege (150,250) vorragen als Positionierhilfe und Verdrehsicherung für einen Muffenteil (3) eines Anschlussverbinders (1) gegenüber einem mit dem Halteelement (4) versehenen Steckerteil (2) des Anschlussverbinders (1), wobei ein axial vorkragender Abschnitt (33) am oberen Rand (32) des Muffenteils (3) zwischen diesen eingreifbar ist.

6. Anordnung nach einem der vorstehenden Ansprüche,
**dadurch gekennzeichnet, dass**
das Halteelement (4) zumindest eine Öffnung (145) in zumindest einem seiner zweiten Haltearme (42,43) umfasst zum Zusammenwirken mit zumindest einem von der Außenseite des Aufnahmeabschnitts (20,201) des Steckerteils (2,200) vorkragenden Element (23,202).

7. Anordnung nach einem der vorstehenden Ansprüche,
**dadurch gekennzeichnet, dass**
über den Umfang des Halteelements (4) verteilt abwechselnd die beiden ersten Haltearme (140,141) mit nach innen gerichteten Rastnasen (146,147) und die beiden zweiten Haltearme (42,43) mit ihren nach außen weisenden Rastnasen (40,41) angeordnet sind.

8. Anschlussverbinder (1), insbesondere für Schlauch- und/oder Rohrleitungen, umfassend zumindest eine Anordnung nach einem der vorstehenden Ansprüche, zumindest einen Muffenteil (3,300,400) und zumindest den Steckerteil (2,200), wobei der Steckerteil 2,200) in einen Muffenabschnitt (31,302,403) des Muffenteils (3,300,400) einsteckbar oder eingesteckt ist, wobei das zumindest eine Halteelement (4) zum lösbaren Halten des Steckerteils (2,200) in dem Muffenteil (3,300,400) vorgesehen ist, wobei der Steckerteil (2,200) mit dem Halteelement (4) versehen ist, wobei das Halteelement (4) auf einem Aufnahmeabschnitt (20,201) des Steckerteils (2,200) verliersicher montiert ist, und das Halteelement (4) den zumindest einen zweiten Haltearm (42,43) mit außenseitig auskragenden Rastnasen (40,41) aufweist, und wobei der zumindest eine zweite Haltearm (42,43) ein freies Ende (142,143) und ein am Halteelementkörper (44) festes Ende (242,243) aufweist und in radialer Richtung bezüglich des Steckerteils (2,200) federelastisch bewegbar ist zum Verrasten der Rastnasen (40,41) an zumindest einer Verrastungsfläche (304,405) oder einer Verrastungsöffnung (35,36) des Muffenteils (3,300,400) und Lösen von dieser.

9. Anschlussverbinder (1) nach Anspruch 8,
**dadurch gekennzeichnet, dass**
der Steckerteil (2,200), insbesondere der Aufnahmeabschnitt (20,201) an dem Steckerteil (2,200), mit zumindest einer mit dem Halteelement (4) zusammenwirkenden Einrichtung (23,202) zur Druckverriegelung versehen ist, die ein Entriegeln des Halteelements (4) bei im Innern des Anschlussverbinders (1) anliegendem Mediendruck verhindert.

10. Anschlussverbinder (1) nach Anspruch 9,
**dadurch gekennzeichnet, dass**
die Druckverriegelungseinrichtung zumindest ein von der Außenseite des Aufnahmeabschnitts (20,201) des Steckerteils (2,200) vorkragendes Element (23,202), insbesondere zumindest einen vorkragenden Stift oder zumindest eine vorkragende Erhebung, und das Halteelement (4) zumindest eine Öffnung (145) in zumindest einem seiner zweiten Haltearme (42,43) umfasst.

11. Anschlussverbinder (1) nach Anspruch 10,
**dadurch gekennzeichnet, dass**
zur Druckverriegelung das vorkragende Element (23,202) durch Verschiebung des Halteelements (4) gegenüber dem Steckerteil (2,200) in Axialrichtung des Halteelements (4) außerhalb einer Öffnung (145) in dem Halteelement (4) liegt und hierdurch ein radiales Bewegen des zweiten Haltearms (42,43) oder der zweiten Haltearme (42,43) blockiert.

12. Anschlussverbinder (1) nach einem der Ansprüche 8 bis 11,
**dadurch gekennzeichnet, dass**
bei zweiteiligem Ausbilden von Steckerteil (2,200) und Halteelement (4) zumindest eines von beiden mit einer Verdrehsicherung versehen ist, insbesondere der Steckerteil (2,200) außenseitig in zumindest einem Abschnitt (20,201) Kanten aufweist und/oder mehreckig oder mehrkantig ausgebildet ist und/oder der Aufnahmeabschnitt (20,201) des Steckerteils (2,200) sich in Längsrichtung des Steckerteils (2,200) erstreckende vorstehende Elemente, insbesondere Streben, aufweist, die mit entsprechend gegengleich ausgebildeten Flächen oder Abschnitten des Halteelements (4) ineinandergreifen und eine Verdrehsicherung zum Verhindern eines Verdrehens des Halteelementes (4) auf dem Aufnahmeabschnitt (20,201) des Steckerteils (2,200) bewirken.

13. Anschlussverbinder (1) nach einem der Ansprüche 8 bis 12,
**dadurch gekennzeichnet, dass**
der Muffenteil (3,300,400) zumindest eine Verdrehsicherung (33,34) und/oder Positionierhilfe aufweist, insbesondere zumindest ein vorkragendes Element (33,34) und/oder zumindest eine gegen Verdrehen oder Fehlpositionieren sichernde Fläche oder Formgebung aufweist.

14. Anschlussverbinder (1) nach einem der Ansprüche 8 bis 13,
**dadurch gekennzeichnet, dass**
der Muffenteil (3) aus zumindest einem Kunststoffmaterial besteht und mit der zumindest einen mantelseitigen Verrastungsöffnung (35,36) versehen ist oder als Zerspanungsteil (300,400), insbesondere aus zumindest einem Metall, ausgebildet und mit zumindest einer Hinterschnittfläche als Verrastungsfläche (304,405) zum Verrasten der zumindest einen Rastnase (40,41) des zweiten Haltearms (42,43) des zumindest einen Halteelements (4) versehen ist.

## Claims

1. Arrangement of a holding element (4) and a plug part (2, 200) for a terminal connector (1) that comprises at least a socket part (3, 300, 400) and at least the plug part (2, 200), wherein the plug part (2, 200) can be inserted or has been inserted into a socket portion (31, 302, 403) of the socket part (3, 300, 400), wherein the holding element (4) is mounted on the plug part (2, 200) for releasably holding the plug part (2, 200) in the socket part (3, 300, 400), wherein the holding element (4) has a holding element body (44), first holding arms (140, 141) having latching lugs (146, 147) directed inwards with respect to the holding element (4), second holding arms (42, 43) having latching lugs (40, 41) directed outwards with respect to the holding element (4), and, axially on both sides at the end, an uninterrupted, continuous edge (47, 148),
**characterised in that**
the first holding arms (140, 141) and the second holding arms (42, 43) each have a free end that is resiliently movable in the radial direction, and an end opposite thereto that is fixed to the holding element body (44)in order to allow the latching lugs (40, 41) of the second holding arms (42, 43) to latch on a latching surface or latching opening of the socket part and to be released from the latching position again, wherein, for releasing the latching lugs from the latching position,an actuating element (45, 46) projects radially outwards at terminally free ends (142, 143) of the second holding arms (42, 43) provided with latching lugs (40, 41) directed outwards with respect to the holding element (4).

2. Arrangement according to claim 1,
**characterised in that**
the latching lugs (40, 41) on the second holding arms (42, 43) are arranged along the longitudinal extent thereof, in particular in the middle region between the free end (142, 143) and the fixed end (242, 243) of the second holding arms (42, 43).

3. Arrangement according to claim 1 or 2,
**characterised in that**
adjacent to the respective actuating element (45, 46), at a distance therefrom, the uninterrupted, continuous terminal edge (47) projects in the manner of a bead.

4. Arrangement according to claim 3,
**characterised in that**
in the region of one actuating element (45), in the axial direction of the holding element (4), a portion (48) protrudes from the terminal edge (47) projecting in the manner of a bead.

5. Arrangement according to either claim 3 or claim 4,
**characterised in that**
two axial webs (150, 250) protrude axially from the terminal edge (47) projecting in the manner of a bead, as positioning aid and anti-rotation means for a socket part (3) of a terminal connector (1), with respect to a plug part (2), provided with the holding element (4), of the terminal connector (1), wherein an axially protruding portion (33) at the upper edge (32) of the socket part (3) is able to engage between said webs.

6. Arrangement according to any one of the preceding claims,
**characterised in that**
the holding element (4) comprises at least one opening (145) in at least one of its second holding arms (42, 43) for cooperation with at least one element (23, 202) protruding from the outside of the receiving portion (20, 201) of the plug part (2, 200).

7. Arrangement according to any one of the preceding claims,
**characterised in that**
the two first holding arms (140, 141) having inwardly directed latching lugs (146, 147) and the two second holding arms (42, 43) having their latching lugs (40, 41) pointing outwards are arranged so as to be distributed in an alternating manner over the circumference of the holding element (4).

8. Terminal connector (1), in particular for hose lines and/or pipelines, comprising at least one arrangement according to any one of the preceding claims, at least one socket part (3, 300, 400) and at least the plug part (2, 200), wherein the plug part (2, 200) can be inserted or has been inserted into a socket portion (31, 302, 403) of the socket part (3, 300, 400), wherein the at least one holding element (4) is provided for releasably holding the plug part (2, 200) in the socket part (3, 300, 400), wherein the plug part (2, 200) is provided with the holding element (4), wherein the holding element (4) is captively mounted on a receiving portion (20, 201) of the plug part (2, 200), and the holding element (4) has the at least one second holding arm (42, 43) having latching lugs (40, 41) protruding on the outside, and wherein the at least one second holding arm (42, 43) has a free end (142, 143) and an end (242, 243) fixed to the holding element body (44) and is resiliently movable in the radial direction with respect to the plug part (2, 200) in order to latch the latching lugs (40, 41) on at least one latching surface (304, 405) or latching opening (35, 36) of the socket part (3, 300, 400) and to release them therefrom.

9. Terminal connector (1) according to claim 8,
**characterised in that**
the plug part (2, 200), in particular the receiving portion (20, 201) on the plug part (2, 200), is provided with at leastone device (23, 202) for pressure locking that cooperates with the holding element (4) and prevents the holding element (4) from being unlocked in the event that media pressure is present in the interior of the terminal connector (1).

10. Terminal connector (1) according to claim 9,
**characterised in that**
the pressure locking device comprises at least one element (23, 202) protruding from the outside of the receiving portion (20, 201) of the plug part (2, 200), in particular at least one protruding pin or at least one protruding elevation, and the holding element (4) comprises at least one opening (145) in at least one of its second holding arms (42, 43).

11. Terminal connector (1) according to claim 10,
**characterised in that**
for pressure locking, the protruding element (23, 202), as a result of displacement of the holding element (4) with respect to the plug part (2, 200), lies outside, in the axial direction of the holding element (4), an opening (145) in the holding element (4) and thus blocks a radial movement of the second holding arm (42, 43) or of the second holding arms (42, 43).

12. Terminal connector (1) according to any one of claims 8 to 11,
**characterised in that**
in the case where the plug part (2, 200) and the holding element (4) are in two parts, at least one of the two parts is provided with an anti-rotation means, in particular the plug part (2, 200), externally in at least one portion (20, 201), has edges and/or is polygonal in shape and/or the receiving portion (20, 201) of the plug part (2, 200) has projectingelements, in particular struts, extending in the longitudinal direction of the plug part (2, 200), said projecting elements interengaging with surfaces or portions of correspondingly mirror-inverted form of the holding element (4) and effecting rotation prevention in order to prevent the holding element (4) from rotating on the receiving portion (20, 201) of the plug part (2, 200).

13. Terminal connector (1) according to any one of claims 8 to 12,
**characterised in that**
the socket part (3, 300, 400) has at least one anti-rotation means (33, 34) and/or positioning aid, in particular at least one protruding element (33, 34) and/or at least one surface or shaping that secures against rotation or incorrect positioning.

14. Terminal connector (1) according to any one of claims 8 to 13,
**characterised in that**
the socket part (3) consists of at least one plastics material and is provided with the at least one latching opening (35, 36) on its lateral surface or is in the form of a machined part, in particular made of at least one metal, and is provided with at least one undercut surface as a latching surface (304, 405) for latching of the at least one latching lug (40, 41) of the second holding arm (42, 43) of the at least one holding element (4).

## Revendications

1. **Agencement** d'un élément de retenue (4) et d'une partie mâle (2, 200) pour un raccord de connexion (1), qui comprend au moins une partie manchon (3, 300, 400) et au moins la partie mâle (2, 200), la partie mâle (2, 200) pouvant être insérée ou étant insérée dans une section de manchon (31, 302, 403) de la partie manchon (3, 300, 400), l'élément de retenue (4) étant monté sur la partie mâle (2, 200) pour la retenue amovible de la partie mâle (2, 200) dans la partie manchon (3, 300, 400), l'élément de retenue (4) présentant un corps d'élément de retenue (44), des premiers bras de retenue (140, 141) avec des ergots d'encliquetage (146, 147) orientés vers l'intérieur par rapport à l'élément de retenue (4), des deuxièmes bras de retenue (42, 43) avec des ergots d'encliquetage (40, 41) orientés vers l'extérieur par rapport à l'élément de retenue (4) et un bord (47, 148) continu et ininterrompu aux deux extrémités axiales, **caractérisé en ce que** les premiers (140, 141) et deuxièmes (42, 43) bras de retenue présentent chacun une extrémité libre et mobile élastiquement en direction radiale et une extrémité opposée, fixée au corps de l'élément de retenue (44), pour encliqueter les ergots d'encliquetage (40, 41) des deuxièmes bras de retenue (42, 43) sur une surface d'encliquetage ou une ouverture d'encliquetage de la partie manchon et pouvoir les libérer à nouveau de la position d'encliquetage, un élément d'actionnement (45, 46) faisant saillie radialement vers l'extérieur aux extrémités libres (142, 143) des deuxièmes bras de retenue (42, 43) pourvus des ergots d'encliquetage (40, 41) orientés vers l'extérieur, pour la libération de la position d'encliquetage.

2. **Agencement selon la revendication 1, caractérisé en ce que** les ergots d'encliquetage (40, 41) sont disposés sur les deuxièmes bras de retenue (42, 43) le long de leur extension longitudinale, notamment dans la zone médiane entre l'extrémité libre (142, 143) et l'extrémité fixe (242, 243) des deuxièmes bras de retenue (42, 43).

3. **Agencement selon la revendication 1 ou 2, caractérisé en ce que** à proximité de l'élément d'actionnement respectif (45, 46), à distance de celui-ci, le bord d'extrémité (47) ininterrompu et continu fait saillie en forme de bourrelet.

4. **Agencement selon la revendication 3, caractérisé en ce que** dans la zone d'un élément d'actionnement (45) en direction axiale de l'élément de retenue (4), une section (48) fait saillie depuis le bord d'extrémité (47) saillant en forme de bourrelet.

5. **Agencement selon l'une des revendications 3 ou 4, caractérisé en ce que** deux nervures axiales (150, 250) font saillie axialement depuis le bord d'extrémité (47) saillant en forme de bourrelet, servant d'aide au positionnement et de sécurité anti-rotation pour une partie manchon (3) d'un raccord de connexion (1) par rapport à une partie mâle (2) du raccord de connexion (1) pourvue de l'élément de retenue (4), une section (33) en saillie axiale sur le bord supérieur (32) de la partie manchon (3) pouvant s'engager entre celles-ci.

6. **Agencement selon l'une des revendications précédentes, caractérisé en ce que** l'élément de retenue (4) comprend au moins une ouverture (145) dans au moins l'un de ses deuxièmes bras de retenue (42, 43) pour coopérer avec au moins un élément (23, 202) en saillie depuis la face extérieure de la section de réception (20, 201) de la partie mâle (2, 200).

7. **Agencement selon l'une des revendications précédentes, caractérisé en ce que** sur le pourtour de l'élément de retenue (4) sont disposés en alternance les deux premiers bras de retenue (140, 141) avec des ergots d'encliquetage (146, 147) orientés vers l'intérieur et les deux deuxièmes bras de retenue (42, 43) avec leurs ergots d'encliquetage (40, 41) orientés vers l'extérieur.

8. **Raccord de connexion (1),** notamment pour des conduites de tuyau et/ou de tube, comprenant au moins un agencement selon l'une des revendications précédentes, au moins une partie manchon (3, 300, 400) et au moins la partie mâle (2, 200), la partie mâle (2, 200) pouvant être insérée ou étant insérée dans une section de manchon (31, 302, 403) de la partie manchon (3, 300, 400), l'au moins un élément de retenue (4) étant prévu pour la retenue amovible de la partie mâle (2, 200) dans la partie manchon (3, 300, 400), la partie mâle (2, 200) étant pourvue de l'élément de retenue (4), l'élément de retenue (4) étant monté de manière inamovible sur une section de réception (20, 201) de la partie mâle (2, 200), et l'élément de retenue (4) présentant au moins un deuxième bras de retenue (42, 43) avec des ergots d'encliquetage (40, 41) en saillie vers l'extérieur, et au moins un deuxième bras de retenue (42, 43) présentant une extrémité libre (142, 143) et une extrémité fixe (242, 243) sur le corps de l'élément de retenue (44) et étant mobile élastiquement en direction radiale par rapport à la partie mâle (2, 200) pour l'encliquetage des ergots d'encliquetage (40, 41) sur au moins une surface d'encliquetage (304, 405) ou une ouverture d'encliquetage (35, 36) de la partie manchon (3, 300, 400) et leur libération.

9. **Raccord de connexion (1) selon la revendication 8, caractérisé en ce que** la partie mâle (2, 200), notamment la section de réception (20, 201) sur la partie mâle (2, 200), est pourvue d'au moins un dispositif (23, 202) coopérant avec l'élément de retenue (4) pour un verrouillage par pression, qui empêche un déverrouillage de l'élément de retenue (4) lorsque le fluide est sous pression à l'intérieur du raccord de connexion (1).

10. **Raccord de connexion (1) selon la revendication 9, caractérisé en ce que** le dispositif de verrouillage par pression comprend au moins un élément (23, 202) en saillie depuis la face extérieure de la section de réception (20, 201) de la partie mâle (2, 200), notamment au moins une broche en saillie ou au moins une protubérance en saillie, et l'élément de retenue (4) comprend au moins une ouverture (145) dans au moins l'un de ses deuxièmes bras de retenue (42, 43).

11. **Raccord de connexion (1) selon la revendication 10, caractérisé en ce que** pour le verrouillage par pression, l'élément en saillie (23, 202) se trouve, par déplacement de l'élément de retenue (4) par rapport à la partie mâle (2, 200) en direction axiale de l'élément de retenue (4), à l'extérieur d'une ouverture (145) dans l'élément de retenue (4), bloquant ainsi un mouvement radial du deuxième bras de retenue (42, 43) ou des deuxièmes bras de retenue (42, 43).

12. **Raccord de connexion (1) selon l'une des revendications 8 à 11, caractérisé en ce que** en cas de formation en deux parties de la partie mâle (2, 200) et de l'élément de retenue (4), au moins l'un des deux est pourvu d'une sécurité anti-rotation, notamment la partie mâle (2, 200) présente extérieurement dans au moins une section (20, 201) des bords et/ou est formée de manière polygonale ou à plusieurs pans et/ou la section de réception (20, 201) de la partie mâle (2, 200) présente des éléments saillants s'étendant dans la direction longitudinale de la partie mâle (2, 200), notamment des entretoises, qui s'engagent avec des surfaces ou des sections correspondantes formées en contrepartie de l'élément de retenue (4) et réalisent une sécurité anti-rotation pour empêcher une rotation de l'élément de retenue (4) sur la section de réception (20, 201) de la partie mâle (2, 200).

13. **Raccord de connexion (1) selon l'une des revendications 8 à 12, caractérisé en ce que** la partie manchon (3, 300, 400) présente au moins une sécurité anti-rotation (33, 34) et/ou une aide au positionnement, notamment au moins un élément en saillie (33, 34) et/ou au moins une surface ou une forme assurant une protection contre la rotation ou un mauvais positionnement.

14. **Raccord de connexion (1) selon l'une des revendications 8 à 13, caractérisé en ce que** la partie manchon (3) est constituée d'au moins une matière plastique et est pourvue d'au moins une ouverture d'encliquetage (35, 36) côté gaine ou est formée comme une pièce usinée (300, 400), notamment en au moins un métal, et est pourvue d'au moins une surface de contre-dépouille comme surface d'encliquetage (304, 405) pour l'encliquetage d'au moins un ergot d'encliquetage (40, 41) du deuxième bras de retenue (42, 43) d'au moins un élément de retenue (4).
